# EUROPÄISCHE PATENTSCHRIFT

(11) **EP 3 328 521 B1**
(45) Veröffentlichungstag und Bekanntmachung des Hinweises auf die Patenterteilung: **09.09.2020**
(21) Anmeldenummer: 16739482.4
(22) Anmeldetag: 18.07.2016
(51) Int. Cl.: B01D 53/22, B01D 63/02, B01D 63/10, B01D 63/12, B01D 65/00

(54) **FLEXIBEL ANPASSBARE MEMBRANKARTUSCHEN ZUR SEPARATION VON FLUIDEN**
FLEXIBLY ADAPTABLE MEMBRANE CARTRIDGES FOR THE SEPARATION OF FLUIDS
CARTOUCHES A MEMBRANE FLEXIBLES ADAPTABLES DESTINEES A SEPARER DES FLUIDES

(30) Priorität: 30.07.2015 EP 15179092
(43) Veröffentlichungstag der Anmeldung: 06.06.2018
(73) Patentinhaber: Evonik Fibres GmbH, 4861 Schörfling am Attersee (AT)
(72) Erfinder: VISSER, Tymen, 7037 EB Beek (NL); PEDERSEN, Steven K., Collingwood, ON L9Y 2R8 (CA)
(74) Vertreter: Evonik Patent Association
(86) Internationale Anmeldenummer: PCT/EP2016/067030
(87) Internationale Veröffentlichungsnummer: WO 2017/016913

(56) Entgegenhaltungen:
- EP-A1- 0 943 367
- EP-A1- 1 598 105
- CN-A- 103 691 323
- US-A- 5 026 479
- US-A- 5 470 469
- US-A1- 2006 049 093

## Beschreibung

Gegenstand der vorliegenden Erfindung sind neuartige Kartuschen und Module zur Trennung von Fluidgemischen, insbesondere zur Gasseparation, ein Verfahren zu deren Herstellung sowie ein Verfahren zu deren Anwendung.

### Stand der Technik

Membranen werden in vielen Bereichen industriell zur Trennung von Gas-, Flüssigkeits- und Gas/- Flüssigkeitsgemischen, nachfolgend jeweils als Fluidgemische bezeichnet, eingesetzt. Dabei werden die Membranen in der Regel eingebaut in Modulen oder Kartuschen verwendet. Module unterscheiden sich dadurch von Kartuschen, dass sie eine komplette Separationseinheit inklusive Gehäuse darstellen. Kartuschen hingegen werden in separaten Gehäusen, bevorzugt in fest in die Separationsanlage eingebaute Gehäuse eingesetzt. Kartuschen haben somit den Vorteil, dass bei ihrem Austausch niedrigere Kosten anfallen als bei Modulen, da das kostspielige, druckfeste Gehäuse nicht mit ersetzt werden muss.

Während im Bereich der Biogasaufbereitung in der Regel kleinvolumige Kartuschen oder Module verwendet werden, werden z.B. im Bereich der Aufreinigung von Erdgas großvolumige Kartuschen oder Module benötigt um große Gasmengen bewältigen zu können. Ferner werden in diesem Einsatzgebiet Kartuschen und Module benötigt, die bei höheren Feedgasdrücken, vorzugsweise von 30 bis 100 bar, verwendet werden können.

So werden z.B. von der Firma UOP Separex™ Gasseparationssysteme zur Aufreinigung von Erdgas vertrieben. Dabei handelt es sich um Kartuschen in denen Flachmembranen um ein zentral angeordnetes Permeatsammelrohr gewickelt sind. Mehrere solcher Kartuschen werden in einem, in der Gasseparationsanlage fest installierten, Gehäuse hintereinandergeschaltet. Die Membranen bestehen aus Zelluloseacetat. Die UOP Technologie hat den Nachteil, dass die Kartuschen eine relativ kurze Lebensdauer aufweisen und je nach Einsatzbedingung bereits nach mehreren Monaten ersetzt werden müssen. Ferner ist die Kapazität der einzelnen Kartuschen unbefriedigend und es besteht Bedarf nach verbesserten Systemen.

Neben den - wie oben beschrieben - bereits kommerziell eingesetzten Flachmembranmodulen gab es eine Vielzahl von Versuchen aus Hohlfasermembranen Kartuschen bzw. Module herzustellen. Beispiele dafür finden sich in US 3422008, US 3455460, US 3475331, US 4207192, US 4210536, US 4220489, US 4430219, US 4631128, US 4715953, US 4865736, US 4881955, US 5,026,479, US 5084073, US 5160042,US 5299749, US 5411662, US 5470469, US 5702601, US 5837032, US 5837033, US 5897729, US 7410580, US 7998254, US 8747980, US 8778062, EP 1 598 105 und CN 103691323.

In der EP 0 943 367 A1 wird eine Kartusche beschrieben, welche aus einem Membranelement und einem dran reversibel befestigten Dichtelement besteht. Ziel der dortigen Erfindung war es beim Austausch der Kartuschen das Dichtelement wiederverwenden zu können und nur das Membranelement austauschen zu müssen. Daher die reversible Anbringung des Dichtelements.

Die in der EP 0 943 367 A1 beschriebenen Kartuschen haben jedoch einige Nachteile. So stellt das Dichtelement in den dort offenbarten Spiralwickelmodulen gleichzeitig die "Anti-Teleskoping" Platte dar.

In der EP 0 943 367 A1 werden die Kartuschen ohne Anti-Teleskoping Platten hergestellt, gelagert und zum Einsatzort transportiert. Dadurch sind die Kartuschen, insbesondere deren Stirnseiten zu diesen Zeitpunkten nicht mechanisch geschützt. Beim Einbau in das Druckgehäuse am Einsatzort müssen die Kartuschen dann mit den Dichtelementen verbunden werden. Die Membranen können somit beim Transport oder beim Einbau leicht an den Stirnseiten beschädigt und somit deren Funktion beeinträchtigt werden.

Ferner bedingt das System der EP 0 943 367 A1, dass diverse Dichtungen nötig sind um das Dichtelement mit dem Membranelement fluiddicht zu verbinden. Diese Dichtungen sind wartungsintensive Schwachstellen. Ferner sind die zusätzlichen Dichtungen Verbrauchsmaterialien, die zusätzliche Kosten verursachen.

In der US2006/0049093 werden ebenfalls Kartuschen mit einem Spiralwickel-Membranelement und einem Dichtelement offenbart. Dieses Dichtelement besteht ebenfalls aus einem Trägerelement und einer Dichtung. Analog zur EP 0 943 367 A1 weist das Membranelement in der US2006/0049093 keine Anti-Teleskoping Platten auf. Auch hier ersetzt das Dichtelement die Anti-Teleskoping Platten. Im Unterschied zur EP 0 943 367 A1 sind die Dichtelemente in der US2006/0049093 jedoch irreversibel mit dem Membranelement verbunden, d.h. das Trägerelement des Dichtelementes ist mit der fluiddichten Barriere und dem Permeatsammelrohr verbunden.

Das System aus der US2006/0049093 weißt ähnliche Nachteile auf wie das der EP 0 943 367 A1. Zudem muss das Trägerelement des Dichtelements mit der fluiddichten Barriere und dem Permeatsammelrohr verklebt werden, was sehr aufwendig ist.

US 5 470 469 A offenbart ein Hohlfasermembranmodul, das an die geometrischen Bedingungen in Druckgehäusen für Spiralwickelmembranen angepasst ist.

EP 1 598 105 A1 offenbart ein Modul zur Parallelschaltung und Reihenschaltung von Membrankartuschen.

US 5 026 479 A offenbart ein Hohlfasermembranmodul mit zentralem Sammelrohr, das sowohl für Feed als auch Permeat einsetzbar ist.

Insbesondere die Betreiber von Fluidseparationsanlagen sind daran interessiert Kartuschen mehrerer Anbieter in ihre Anlagen einbauen zu können. Das erhöht den Wettbewerb zwischen den Anbietern der Kartuschen und senkt somit deren Preis, zudem erhöht es aber auch die Betriebssicherheit, da Lieferengpässe, die durch Abhängigkeit von wenigen Lieferanten bedingt werden können, vermieden werden können.

Lieferanten von Kartuschen haben vor diesem Hintergrund großes Interesse, dass ihre Produkte in möglichst vielen Fluidseparationsanlagen eingesetzt werden können. Hier stellt sich jedoch das Problem, dass in verschiedenen Fluidseparationsanlagen Modulgehäuse mit unterschiedlichen Innendurchmessern bzw. Geometrien vorhanden sein können. Der Kartuschenhersteller muss somit für jede Fluidseparationsanlage speziell abgestimmte Kartuschengeometrien bereithalten. Das erhöht die Komplexität des Herstellungsverfahrens, sowie der Lagerhaltung und Logistik.

Es besteht somit ein großer Bedarf an einer einfachen und kostengünstigen Lösung, die es erlaubt Standardkartuschen an verschiedene Gegebenheiten in unterschiedlichen Fluidseparationsanlagen anzupassen.

### Aufgaben der Erfindung

Aufgabe der vorliegenden Erfindung war es daher neuartige Kartuschen bzw. Fluidseparationsanlagen bereitzustellen, die die zuvor beschriebenen Nachteile der Kartuschen des Standes der Technik nicht oder nur in verringertem Masse aufweisen.

Die neuen Kartuschen sollen insbesondere geeignet sein, herkömmliche Kartuschen in bestehenden Anlagen zu ersetzen. Dabei soll es insbesondere einfach und kostengünstig möglich sein die Kartuschen an verschiedene Gegebenheiten in unterschiedlichen Fluidseparationsanlagen anzupassen.

In einer weiteren speziellen Aufgabe, sollen die erfindungsgemäßen Kartuschen so flexibel ausgestaltbar sein, dass sie mit Hohlfaser- aber auch mit Flachmembranen ausgestattet werden können.

In einer weiteren speziellen Aufgabe sollen die neuen Kartuschen bzw. Module im Vergleich mit den Systemen des Standes der Technik zumindest vergleichbare Trennleistungen aufweisen. Vorzugsweise sollen sie längere Betriebszeit ermöglichen und/oder ein zu geringeren Kosten herstellbar sind und/oder eine bessere Trennleistung aufweisen, insbesondere bezogen auf das Fluidvolumen pro Stunde und / oder die Reinheit.

Ebenfalls Aufgabe der vorliegenden Erfindung war es Kartuschen bereitzustellen, deren Bestandteile von der Produktion bis zum Einbau am Ort der Anwendung eine hohe mechanische Stabilität und hohen mechanischen Schutz aufweisen. Ferner soll der Einbau der Kartuschen am Einsatzort unkompliziert und schnell möglich sein.

Weitere nicht explizit genannte Aufgaben ergeben sich aus dem Gesamtzusammenhang der vorliegenden Beschreibung, Beispiele, Ansprüche und Zeichnungen.

### Vorteile der Erfindung

Die Erfinder haben nun herausgefunden, dass es möglich ist die o.g. Aufgaben zu lösen in dem Kartuschen (1) bereitgestellt werden, die aus einem Membranelement (2) und aus einem davon unabhängigen und daran reversibel anbringbaren Dichtelement (3) bestehen. Das Membranelement (2) enthält alle Bestandteile der Kartusche (1), die für Fluidseparation verantwortlich sind. Das Dichtelement (3) ist ein unabhängiges Teil der Kartusche (1), das die Aufgabe hat, die Kartusche (1) nach dem Einbau in ein Modulgehäuse (4) fluiddicht mit der inneren Oberfläche des Modulgehäuses (4) zu verbinden. Dies ist notwendig um eine Vermischung des Feedstroms der Kartusche (1) mit deren Produktstrom, in der Regel dem Retentatstrom, zu verhindern. Die erfindungsgemäßen Dichtelemente (3) bestehen aus einer Dichtung (8) und einem Trägerelement (9), wobei das Trägerelement (9) in seiner Größe und Form variabel ausgestaltbar ist und mit dem Membranelement (2) reversibel verbunden werden kann. Das Trägerelement (9) wird, an seiner, der inneren Oberfläche des Modulgehäuses (4) zugewandten, Oberfläche (9a), umlaufend von einer Dichtung (8) überzogen, die eine fluiddichte Verbindung zum Modulgehäuse (4), nach dem Einbau der Kartusche (1) in das Modulgehäuse (4) herstellt.

Die erfindungsgemäßen Kartuschen (1) weisen den großen Vorteil auf, dass das Membranelement (2), das den kostenintensivsten Teil der Kartusche (1) darstellt, in einer Normgröße hergestellt werden kann und bei der Anpassung an verschiedene Geometrien von Modulgehäusen (4) lediglich das Dichtelement (3) ausgetauscht und angepasst werden muss. Entsprechende Dichtelemente (3) anzupassen ist ein weitaus geringerer Aufwand als komplette Membranelemente (2) anzupassen. Es ist auch problemlos möglich verschiedene Dichtelemente (3) auf Lager vorzuhalten und somit schnell und flexibel unterschiedliche Kundenanforderungen bedienen zu können. Ursachen für verschiedene Kundenanforderungen können neben einer durch die aufzureinigende Gasmenge bedingten Größenvariation der Module auch durch den Betriebsdruck bedingte Variationen in der Dicke des druckfesten Modulgehäuses (4) sein. Höhere Drücke erfordern dickere Modulgehäuse (4). Eine größere Dicke äußert sich jedoch in der Regel in einem geringeren Innendurchmesser des Modulgehäuses (4). In solchen Fällen weisen die erfindungsgemäßen Kartuschen (1) durch ihre Variabilität besondere Vorteile auf.

Die erfindungsgemäßen Kartuschen (1) können einfach und flexibel durch Verwendung unterschiedlicher Membranelemente (2) angepasst werden. So ist es möglich sowohl Hohlfaserals auch Flachmembranen sowie verschiedene Modulaufbauten zu verwenden. Details dazu werden weiter unten erläutert.

Weitere nicht explizit genannte Vorteile der vorliegenden Erfindung ergeben sich aus dem Gesamtzusammenhang der Beschreibung, den Beispielen, den Ansprüchen und Zeichnungen. Mit der vorliegenden Erfindung ist es gelungen Kartuschen (1) bereitzustellen, die, wenn gewünscht, miteinander zu einer Kartuschenkette verbunden werden können und die flexibel als Ersatzkartuschen in vielen bestehenden Separationsanlagen, z.B. denen von UOP Systemen, eingesetzt werden können.

Gegenstand der vorliegenden Erfindung sind Kartuschen (1) nach Anspruch 1 sowie Fluidseparationsmodule (7) nach Anspruch 12. Bevorzugte Ausgestaltungsformen werden in den abhängigen Ansprüchen beansprucht bzw. in der nachfolgenden Beschreibung näher erläutert.

### Detaillierte Beschreibung und Definitionen

Die vorliegende Erfindung wird nachfolgend im Detail beschrieben. Zuvor werden einige wichtige Begriffe definiert.

Der Quotient der Permeanzen der zu trennenden einzelnen Fluide, insbesondere der Einzelgase, ergibt die **Selektivität** einer Membran zur Trennung bezüglich der zwei Fluide und gibt somit an wie gut die Membran ein Fluidgemisch bezüglich der beiden Komponenten auftrennen kann. Als **Permeat** wird der gesamte auf der Niederdruckseite der Membran, Membranmodule oder Membrantrennschritts anfallende Strom bezeichnet.

Als **Permeatfluid bzw. Permeatgas** wird/werden die jeweils an der Membran, an dem Membranmodul, oder im Membrantrennschritt im **Permeatstrom** gegenüber den jeweiligen Eintrittsstrom angereicherten Komponente/Komponenten bezeichnet.

Als **Retentat** wird der Gesamte auf der Hochdruckseite der Membran, Membranmodule oder Membrantrennschritts anfallende Strom bezeichnet, der nicht durch die Membran hindurch tritt.

Als **Retentatfluid bzw. Retentatgas** wird/werden die jeweils an der Membran, an dem Membranmodul, oder im Membrantrennschritt im **Retentatstrom** gegenüber den jeweiligen Eintrittsstrom angereicherten Komponente/Komponenten bezeichnet.

**Zu trennendes Fluidgemisch, insbesondere zu trennendes Gasgemisch,** bezeichnet ein Fluidgemisch, bevorzugt ein Gasgemisch, aus mindestens zwei Fluiden, bevorzugt zwei Gasen bzw. einen Strom dieses Fluidgemisches, bevorzugt Gasgemisches, das/der mittels des erfindungsgemäßen Erzeugnisses bzw. der erfindungsgemäßen Vorrichtung aufgetrennt werden soll.

Anhand der nachfolgend beschriebenen bevorzugten und speziellen Ausführungsformen der erfindungsgemäßen Erzeugnisse und Vorrichtungen sowie der bevorzugten und besonders geeigneten Ausführungen sowie der Zeichnungen und Beschreibungen der Zeichnungen wird die Erfindung lediglich exemplarisch näher erläutert, d. h. sie ist nicht auf diese Ausführungs- und Anwendungsbeispiele oder auf die jeweiligen Merkmalskombinationen innerhalb einzelner Ausführungsbeispiele beschränkt.

Einzelne Merkmale, die im Zusammenhang mit konkreten Ausführungsbeispielen angeben und/oder dargestellt sind, sind nicht auf diese Ausführungsbeispiele oder die Kombination mit den übrigen Merkmalen dieser Ausführungsbeispiele beschränkt, sondern können im Rahmen der technischen Möglichkeiten, mit jeglichen anderen Varianten, auch wenn sie in den vorliegenden Unterlagen nicht gesondert behandelt sind, kombiniert werden.

Gleiche Bezugszeichen in den einzelnen Abbildungen und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

### Beschreibung der Abbildungen:

Abbildung 1 zeigt eine Sprengzeichnung einer erfindungsgemäßen Kartusche (1) mit einem Membran- und einem Dichtelement (2) bzw. (3).

Abbildung 2 zeigt einen Längsschnitt einer erfindungsgemäßen Kartusche (1) in der das Dichtelement (3) am Membranelement (2) fixiert ist. In der gezeigten Ausführungsform wurden Hohlfasermembranen in der der erfindungsgemäßen Kartusche verbaut.

Abbildung 3 zeigt beispielhaft einen Längsschnitt eines erfindungsgemäßen Fluidseparationsmoduls mit zwei eingesetzten erfindungsgemäßen Kartuschen (1a) und (1b).

Abbildung 4 zeigt den Aufbau eines Membranelements (2) mit gewickelter Flachmembran

### Allgemeine Beschreibung der Erfindungsgemäßen Kartusche (1)

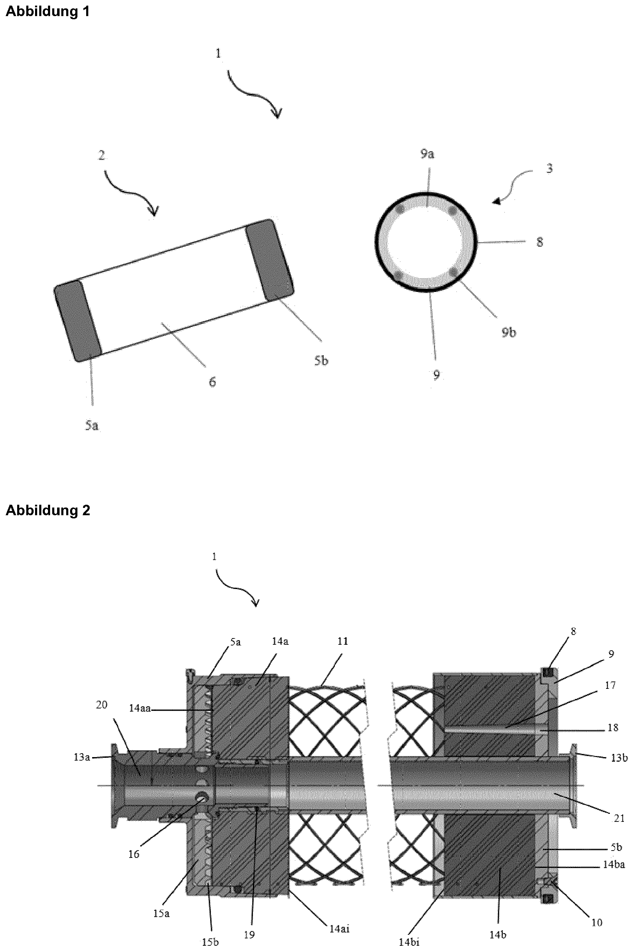

Bezug nehmend auf Abbildung 1 umfasst eine erfindungsgemäße Kartusche (1) zur Auftrennung eines Fluidgemisches, bevorzugt eines Gasgemisches, ein Membranelement (2) und ein Dichtelement (3). Im Membranelement (2) erfolgt die Auftrennung des Fluidgemisches mittel Hohlfaser- oder Flachmembranen.

### Beschreibung des Dichtelements (3)

Das Dichtelement (3) hat die Aufgabe die erfindungsgemäße Kartusche (1) nach dem Einbau in ein Fluidseparationsmodul (7) fluiddicht mit der Innenwand des Modulgehäuses (4) zu verbinden. Dadurch wird erreicht, dass der Feedstrom des zu trennenden Fluidgemisches sich nicht mit dem Retentat bzw. Permeatstrom vermischen kann. Die Kartuschen (1) der vorliegenden Erfindung zeichnen sich dadurch aus, dass das Dichtelement (3) ein eigenständiges, unabhängiges Element der Kartusche (1) darstellt.

Das Dichtelement (3) besteht dabei aus mindestens zwei Teilen, wovon
▪ ein Teil eine Dichtung (8), ist, die nach Einbau der Kartusche (1) in ein Modulgehäuse (4) eines Fluidseparationsmoduls (7), dicht an die Innenwand des Modulgehäuses (4) anschließt, und
▪ ein weiteres Teil ein Trägerelement (9) ist, dass die Dichtung (8) trägt und das reversibel mit dem vorderen oder hinteren Verschluss V1 (5a) oder V2 (5b) des Membranelements (2) verbunden wird.

Kartuschen des Standes der Technik weisen ebenfalls Dichtungen auf die die Kartusche mit der Innenwand des Modulgehäuses verbinden. Im Stand der Technik werden meist Dichtungen eingesetzt, die entweder im Modulgehäuse sitzen oder, was die Regel ist, am vorderen oder hinteren Verschluss des Membranelements. Das bedeutet, dass die Geometrie des Membranelements genau auf die Geometrie des Modulgehäuses abgestimmt sein muss. Somit muss im Stand der Technik bei einer Änderung der Geometrie des Modulgehäuses jedes Mal die komplette Geometrie des Membranelements angepasst werden.

Die vorliegende Erfindung unterscheidet sich dadurch vom Stand der Technik, dass die Kartuschen (1) neben dem Membranelement (2) ein davon unabhängiges Dichtelement (3) aufweisen. Dieses Dichtelement (3) wiederum besteht aus einem Trägerelement (9) und einer Dichtung (8). Das Trägerelement (9) kann reversibel mit dem Membranelement (2), genauer gesagt mit dem vorderen Verschluss V1 (5a) oder dem hinteren Verschluss V2 (5b) verbunden werden. Reversibel bedeutet, dass die Verbindung wieder gelöst werden kann ohne das Membranelement (2) oder das Trägerelement (9) zu zerstören. Dies wird bevorzugt dadurch erreicht, dass das Trägerelement (9) auf V1 (5a) oder V2 (5b) aufgeschraubt wird oder mit diesem mittels Schrauben oder Klemmelementen, bevorzugt Wiederhaken oder Einrasthaken, oder mit einem Kleber verbunden wird. Kombinationen bzw. von Fachmann leicht auffindbare Abwandlungen der genannten Maßnahmen sind ebenfalls möglich. Vorzugsweise wird zumindest eine geringe Menge Kleber zwischen dem Trägerelement (9) und V1 (5a) bzw. V2 (5b) verwendet um die Gasdichtigkeit der Verbindung zu erhöhen. Der Kleber muss so beschaffen sein, dass er ein zerstörungsfreies Trennen der Verbindung zwischen Trägerelement (9) und V1 (5a) bzw. V2 (5b) ermöglicht. Besonders bevorzugt sind Siliconkleber. Ebenfalls besonders bevorzugt wird das Trägerelement (9) mit V1 (5a) oder V2 (5b) mittels Schrauben oder Klemmelementen verbunden. Ein Beispiel dafür wird in Abbildung 2 gezeigt. Während in Abbildung 1 Bohrungen (9b) im Trägerelement (9), durch die Schrauben geführt werden, gezeigt werden, zeigt Abbildung 2, wie das Trägerelement (9) mittels der Schraube (10) am hinteren Verschluss V2 (5b) des Membranelements (2) fixiert ist.

Das Trägerelement (9) kann in seiner Form und Geometrie beliebig ausgestaltet sein und somit einfach, schnell und kostengünstig an unterschiedliche Geometrien von Modulgehäusen (4) angepasst werden. Im Gegensatz zu den Kartuschen des Standes der Technik muss bei den erfindungsgemäßen Kartuschen (1) nicht immer die Geometrie der ganzen Kartusche (1) angepasst werden, sondern nur die des Dichtelements (9). Die erfindungsgemäßen Kartuschen (1) stellen sozusagen ein Baukastensystem dar in dem mehrere verschiedene Membranelemente (2), Details siehe unten, mit verschiedenen Dichtelementen (3) kombiniert werden können. Somit können unterschiedliche Kundenanforderungen schnell und einfach bedient werden.
Die Trägerelemente (9) können unterschiedlich ausgestaltet sein. Bevorzugt sind sie an den Verschluss V1 (5a) oder V2 (5b) des Membranelements (2), an dem sie angebracht werden, angepasst. Dies betrifft die Fixierungsmethode, z. B. Bohrlöcher für Schrauben (siehe (9b) in Abbildung 1). Es betrifft aber auch Öffnungen, für Fluidströme, die durch das Trägerelement (9) in die Kartusche (1) ein- oder ausgeführt werden, je nachdem, ob das Trägerelement an V1 (5a) oder V2 (5b) fixiert ist. Entsprechende Ausgestaltungsformen für Trägerelemente (9) sind für einen Fachmann leicht auffindbar. Eine nicht abschließende Liste von bevorzugten Ausgestaltungsformen umfasst:
- Trägerelemente (9), die als Platte ausgeführt sind, die, je nachdem ob sie an V1 (5a) oder V2 (5b) das Membranelements (2) angebracht werden, Fluideinlassöffnungen oder -auslassöffnungen aufweisen
- Trägerelemente (9) die als Ring ausgeführt wird (siehe Abbildungen 1 und 2), wobei vorzugsweise der Durchmesser der Öffnung in der Mitte des Rings zwischen 35 und 80%, besonders bevorzugt zwischen 40 und 80% und ganz besonders bevorzugt zwischen 50 und 75% des äußeren Durchmessers des jeweiligen Verschluss V1 (5a) bzw. V2 (5b) beträgt, mit dem das Trägerelement (9) verbunden wird,
- Trägerelemente (9), die als Sieb ausgeführt sind.

Das Trägerelement (9) kann im Prinzip aus jedem Material hergestellt werden, dass den Betriebsbedingungen der Fluidseparationsanlage, insbesondere Temperatur und Druck, standhält. Bevorzugt wird das Trägerelement (9) aus Metal oder Kunststoff hergestellt. Das Trägerelement (9) wird besonders bevorzugt aus einem Hochleistungskunstostoff, ganz besonders bevorzugt aus einem faserverstärkten Hochleistungskunststoff, wie z.B. PA (6, 6/6, 12 etc.), PEEK, Polyphenylensulphit (PPS), Polyphenylenether/Polystyren-Mischungen (PPE/PS), Polyphtalamid (PPA) oder aus Metall, besonders bevorzugt Edelstahl oder Aluminium, hergestellt. Die Faserverstärkung kann besonders bevorzugt mittels Glasfasern oder Carbonfasern oder Mineralfaser erfolgen. Ganz besonders bevorzugt sind Glasfasern.

Wie bereits erwähnt umfasst das Dichtelement (3) auch eine Dichtung (8) (siehe Abbildungen 1 und 2). Diese Dichtung ist bevorzugt umlaufend um das Trägerelement (9) angeordnet. Als Dichtungen (8) werden bevorzugt verwendet symmetrische Nutringe oder O-Ringe oder Abstreifer, besonders bevorzugt symmetrische Nutringe aus H-NBR (hydrierter Acrylnitrilbutadien-Kautschuk).

Um die Dichtungen (8) am Trägerelement (9) zu fixieren weist das Trägerelement (9) bevorzugt Nuten (siehe Abbildung 2) auf.

### Allgemeine Beschreibung des Membranelements (2)

Das Membranelement (2) weist auf:
- Hohlfaser- oder Flachmembranen (11) (in Abbildung 1 nicht dargestellt), mit einem vorderen Ende ME1 (11a) auf der Seite auf der das zu trennende Fluidgemisch den Membranen zugeführt wird, und einem hinteren Ende ME2 (11b) auf der gegenüberliegenden Seite,
- einen vorderen Verschluss V1 (5a) an ME1 (11a)
- einen hinteren Verschluss V2 (5b) an ME2 (11b)
- eine für das zu trennende Fluidgemisch impermeable Barriere (6), die um die Membranen (11) im Bereich zwischen V1 (5a) und V2 (5b), angeordnet ist.

In besonders bevorzugten Ausführungsformen (siehe zum Beispiel Abbildung 2) weist das Membranelement (2) zudem ein, aus einem oder mehreren Segmenten bestehendes, Permeatsammelrohr PSR (13) mit einem vorderen Ende PSRE1 (13a) und einem hinteren Ende PSRE2 (13b). Besteht das PSR (13) aus mehreren Segmenten, z.B. (20) und (21) in Abbildung 2, so werden diese innerhalb eines Membranelements (2) bevorzugt durch eine Verschraubung oder eine Flansch- oder eine Steckverbindung oder durch einen Bajonettverschluss oder durch Kleben miteinander verbunden.

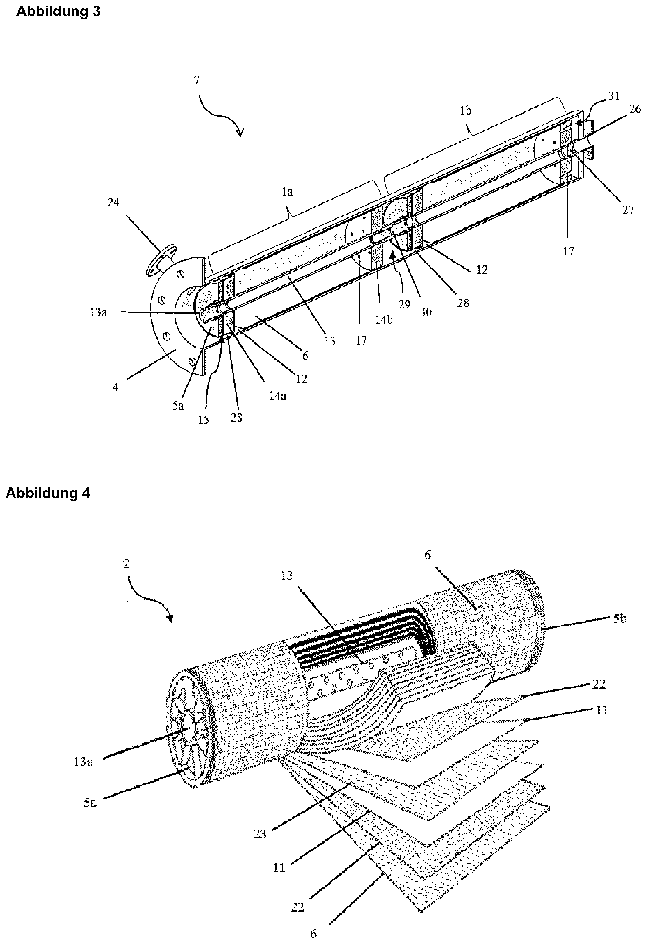

Wird ein PSR (13) verwendet, so sind die Hohlfaser- oder Flachmembranen (11) um das PSR (13) herum angeordnet, wobei deren vorderes Ende ME1 (11a) auf der Seite von PSRE1 (13a) und deren hinteres Ende ME2 (11b) auf der Seite des PSRE2 (13b) ist. Analog ist in diesem Fall eine für das zu trennende Fluidgemisch impermeable Barriere (6), um die Anordnung aus PSR (13) und Hohlfasermembranen (11) angeordnet im Bereich zwischen V1 (5a) und V2 (5b). Kartuschen (1) mit zentralem PSR (13) weisen den Vorteil auf, dass mehrere davon, wie in Abbildung 3 gezeigt als Kartuschenkette in einem Modulgehäuse (4) angeordnet werden können.. Das PSR (13) besteht bevorzugt aus einem Material, dass bei den Betriebsbedingungen der Kartusche (1), d.h. bei Betriebsdruck und Betriebstemperatur mechanisch stabil und korrosionsbeständig ist. Es kann bevorzugt aus einem Metal oder einem Kunststoff gefertigt werden. Besonders bevorzugt sind Stahl, Aluminium oder Kunststoff, und ganz besonders ist Edelstahl

Im Prinzip können für das erfindungsgemäße Membranelement (2) bekannte Kartuschen des Standes der Technik bei denen ein Dichtring direkt am vorderen oder hinteren Verschluss, und nicht als Dichtelement (3) angebracht ist, derart zu einem erfindungsgemäßen Membranelement (2) umfunktioniert werden, dass deren vordere oder hintere Verschlüsse so ausgestaltet werden, dass das Dichtelement (3) dort befestigt werden kann.

Zur Herstellung der Membranelemente (2) können Hohlfaser- oder Flachmembranen aus verschiedenen Materialien, bevorzugt Polyethersulfon, Polysulfon, Polyetherimid, Polyaramid, Polyimid, Polycarbonat, Polyphenylenoxid, Zellulose Acetat, Polyaryletherketon oder Polyetheretherketon verwendet werden. Die Wahl der Membranen hängt vom Trennproblem ab. Die erfindungsgemäßen Kartuschen (1) und Module (7) können sowohl zur Trennung von Flüssigkeiten als auch von Gasen als auch von Gemischen aus Flüssigkeiten und Gasen verwendet werden. Vorzugsweise werden sie zur Trennung von Gasen verwendet. Je nach Trennproblem stehen verschiedene kommerzielle Membranen zur Verfügung.

Besonders bevorzugt zur Trennung von Gasen sind Hohlfasermembranen aus Polyimiden, da diese bei hohen Temperaturen eingesetzt werden können und auch eine sehr gute Selektivität und Permeanz aufweisen. Besonders bevorzugt sind Polyimide, die erhalten wurden durch Reaktion von
mindestens einem Dianhydrid, ausgewählt aus der Gruppe bestehend aus 3,4,3'4'-Benzophenontetracarbonsäure-dianhydrid, 1,2,4,5-Benzol-tetracarbonsäure-dianhydrid, 3,4,3'4'-Biphenyltetracarbonsäure-dianhydrid, Oxydiphthalsäure-dianhydrid, Sulfonyldiphthasäure-dianhydrid, 1,1,1,3,3,3-Hexafluor-2,2-propyliden-diphthalsäure-dianhydrid
und
mindestens einem Diisocyanat, ausgewählt aus der gruppe bestehend aus Toluol-2,4-diisocyanat, Toluol-2,6-diisocyanat, 4,4'-Methylendiphenyldiisocyanat, 2,4,6-Trimethyl-1,3-phenylenediisocyanat, 2,3,4,5-Tetramethyl-1,4-phenylenediisocyanat.

Diese bevorzugten Polyimide weisen eine hohe Plastifizierungsbeständigkeit auf. Ganz besonders bevorzugt sind Polyimide umfassend die Monomereinheiten A und B, mit: 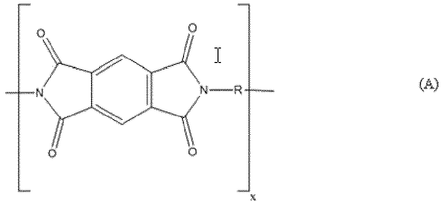 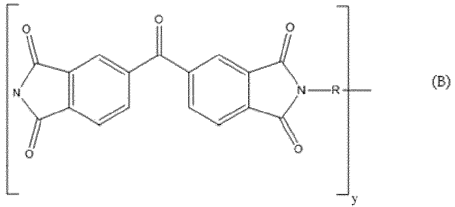 wobei 0 ≤ x ≤ 0,5 und 1 ≥ y ≥ 0,5 ist und R einen oder mehrere identische oder unterschiedliche Reste, ausgewählt aus der Gruppe, bestehend L1, L2, L3 und L4, mit 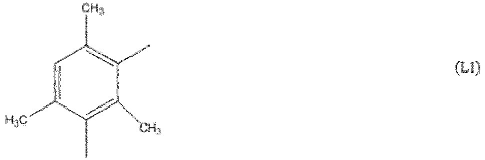 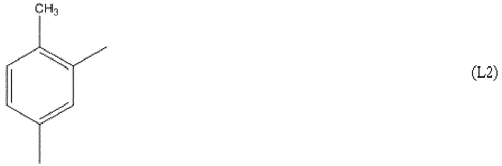 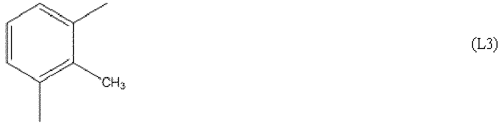 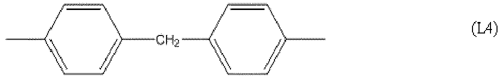 darstellt.

Am meisten bevorzugt sind Polymere mit x = 0, y = 1 und R bestehend aus 64 mol % L2, 16 mol % L3 und 20 mol % L4. Dieses Polymer ist kommerziell erhältlich unter dem Namen P84 oder P84 Typ 70 von der Evonik Fibres GmbH und ist registriert unter der CAS-Nummer: 9046-51-9. Ein weiteres besonders bevorzugtes Polymer besteht aus x = 0,4, y = 0,6 und R = 80 mol % L2 und 20 mol % L3. Dieses Polymer ist kommerziell erhältlich als P84HT oder P84 HT 325 von der Evonik Fibers GmbH und ist registriert unter der CAS-Nummer: 134119-41-8.

Die erfindungsgemäß bevorzugt verwendeten Hohlfasermembranen weisen einen Durchmesser von 150 bis 500 µm und/oder eine Länge von 150 bis 300 cm auf.

Werden im Membranelement (2) Hohlfasermembranen verwendet, so sind mehrere Ausgestaltungsformen mit oder ohne PSR (13) möglich. In der Regel weisen die erfindungsgemäßen Kartuschen (1) bei Verwendung von Hohlfasermembranen Vergussabschnitte VA1 (14a) an ME1 (11a) und VA2 (14b) an ME2 (11b) auf. Diese werden nach bekannten Methoden aus Harzen hergestellt.

Wird ein PSR (13) im Membranelement (2) zusammen mit Hohlfasermembranen verwendet, werden die Hohlfasermembranen bevorzugt als ein Bündel (11) oder zu mehreren Bündeln um das PSR (13) angeordnet, entweder parallel zur Längsachse des PSR (13) oder bevorzugt um das PSR (13) gewickelt, besonders bevorzugt schraubenlinienförmig gewickelt, ganz besonders bevorzugt derart, dass sich die Schraubenlinien pro Wickellage überkreuzen, d.h. dass eine Lage schraubenlinienförmig aus Richtung VA1 (14a) nach VA2 (14b) gewickelt wird, die nachfolgende dann aus Richtung von VA2 (14b) nach VA1 (14a) und dann immer abwechseln so weiter.

Mit dieser Technik ist es möglich auch großvolumige Kartuschen (1) herzustellen, wobei bevorzugt das Bündel aus Hohlfasermembranen (11) einen weitgehend kreisförmigen Querschnitt mit einem Durchmesser von 150-200 mm, bevorzugt von 170-195 mm, besonders bevorzugt von 180-190 mm aufweist.

Bei verschiedenen Membranelementen (2) können die Verschlüsse V1 (5a) oder V2 (5b) und auch die impermeable Barrieren (6) jeweils unterschiedlich ausgestaltet sein bzw. verschiedene Kombinationen davon vorhanden sein.

In einer bevorzugten Ausführungsform ist die impermeable Barriere (6) im kompletten Bereich zwischen V1 (5a) und V2 (5b) impermeabel ausgeführt. Besonders bevorzugt ist die Barriere (6) in diesem Fall fest mit den Verschlüssen V1 (5a) oder V2 (5b) verbunden. Fest bedeutet, dass die Verbindung ohne mechanische Zerstörung des Verschlusses V1 (5a) oder V2 (5b) oder der Barriere (6) nicht trennbar ist. Ein Beispiel hierfür wird in Abbildung 4 gezeigt.
In einer weiteren bevorzugten Ausführungsform weist die Barriere (6) im Bereich zwischen V1 (5a) und V2 (5b) mindestens einen Fluideinlass oder -auslass auf. Bei diesen Kartuschen wird entweder der Feedstrom durch den Fluideinlass gleitet oder ein Permeatstrom durch die Öffnungen, die dann als Fluidauslass fungieren abgezogen. Beispiele hierfür sind die Kartuschen nach Abbildung 2, wobei die impermeable Barriere (6) und die Fluideinlass oder -auslasse jedoch nur in Abbildung 3 gezeigt werden.

Die impermeable Barriere (6) besteht bevorzugt aus einer Folie oder einem Schlauch oder einem Rohr oder einem Tape oder einem mit Epoxid Harz "vermischtem" Glassgewebe. Besonders bevorzugt sind Materialien die sich eng an das Membranbündel bzw. die Membranwicklung anlegen, insbesondere schrumpfbare Materialien wie z.B. Polyolefine, PVC oder Polyimiden. Dadurch werden Zwischenräume zwischen der Barriere (6) und der äußeren Oberfläche des Membranbündels bzw. der Wicklung minimiert und die Effizienz gesteigert werden.

Aus Verarbeitungsgründen kann es angebracht sein das Faserbündel oder die Membranwicklung vor der Anbringung der Barriere (6) mit einem geeigneten Mittel (in den Abbildungen nicht dargestellt), z.B. einem Nylon Strickschlauch, zu umgeben um die Barriere (6) einfacher aufbringen zu können und um das Membranbündel bzw. die Wicklung in Form zu halten.

Um eine gute Anbindung der impermeablen Barriere (6) an das Membranelement (2) zu gewährleisten kann es vorteilhaft sein, die die Barriere (6) in VA1 (14a) und / oder VA2 (14b) mit einzugießen. Alternativ oder ergänzend kann die Barriere (6) auch durch äußere Fixierhilfsmittel, wie z.B. Drähte, Klammern oder durch Verschweißen oder Kleben oder Aufschrumpfen, am Membranelement (2) fixiert werden. Kombinationen der genannten Maßnahmen sind genauso möglich wie alternative technische Lösungen, die für einen Fachmann leicht zu finden sind.

Die Verschlüsse V1 und/oder V2 sind, im Unterschied zum Dichtelement inklusive all dessen Bestandteilen, Teil des Membranelements und mit dem Membranelement, bevorzugt irreversibel, verbunden. Die Verschlüsse sind vorzugsweise mit der impermeablen Barriere und/oder dem Membranbündel und/oder der Membranwicklung und/oder einem Vergussabschnitt und/oder dem Permeatsammelrohr verbunden. Die Anbindung kann nach dem Fachmann bekannten Methoden durchgeführt werden.

Die Verschlüsse haben zum einen die Funktion die Enden des Membranbündels oder die Stirnseiten der Membranwicklungen oder die Vergussabschnitte mechanisch zu schützen. Sie stabilisieren jedoch auch die Geometrie des Membranelements und bilden die Anbindungsstelle für das Dichtelement.

Die Verschlüsse können aber auch noch zusätzliche Funktionen erfüllen, z.B. wenn sie in Form von Endkappen vorliegen die eine Fluidkommunikation zwischen dem Permeatsammelrohr und den kernen der Hohlfasermembranen herstellen. Detailliertere Beispiele zu solchen Spezialfunktionen werden weiter unten beschrieben.

Die Verschlüsse V1 (5a) bzw. V2 (5b) können als Endkappen oder Deckel ausgeführt werden. "Kappe" bedeutet im Unterschied zu z.B. einem Deckel, dass Teile der jeweiligen Endkappe über ein Ende ME1 (11a) bzw. ME2 (11b) der Membranen oder über die in der Regel bei Hohlfasermembranen vorhandenen Vergussabschnitte VA1 (14a) bzw. VA2 (14b) geschoben werden. Ein Beispiel hierfür findet sich in Abbildung 2. Bei der nachfolgenden detaillierten Beschreibung der Ausführungsform gemäß Abbildung 2 werden die dort verwendeten Endkappen EK1 und EK 2 mit (5a) bzw. (5b) bezeichnet, da die Endkappen ja jeweils den Verschluss V1 bzw. V2 darstellen.

Die Verschlüsse V1 (5a) bzw. V2 (5b) können aber auch als Deckel, z.B. Scheibe mit Fluideinlassöffnungen bzw. -auslassöffnungen oder Siebe, ausgeführt werden, die am jeweiligen Ende ME1 (11a) oder ME2 (11b) des Membranbündels oder der -wicklung angeordnet sind. Ein Beispiel hierfür findet sich in Abbildung 4.

Die Verschlüsse V1 (5a) bzw. V2 (5b) der erfindungsgemäßen Membranelemente (2) bestehen bevorzugt aus einem Hochleistungskunststoff, besonders bevorzugt einem faserverstärkten Hochleistungskunstostoff wie z.B. PA (6, 6/6, 12 etc.), PEEK, Polyphenylensulphit (PPS), Polyphenylenether/Polystyren-Mischungen (PPE/PS), Polyphtalamid (PPA) oder aus Metall, bevorzugt Edelstahl oder Aluminium. Zur Faserverstärkung werden bevorzugt Glasfasern oder Carbonfasern oder Mineralfasern, besonders bevorzugt Glasfasern verwendet.

In besonderen Fällen können die Verschlüsse V1 (5a) und V2 (5b) auch durch die Vergussabschnitte VA1 (14a) bzw. VA2 (14b) selbst gebildet werden.

Nachfolgend werden verschiedene bevorzugte Ausgestaltungsformen für Membranelemente (2) beschrieben.

### Membranelement (2) ohne PSR (13)

In einer ersten besonders bevorzugten Ausführungsform weist die Kartusche (1) kein PSR (13) auf. Ein Beispiel für eine Kartusche ohne PSR (13) ist in der WO 2014/198501 zu finden. Zur Vermeidung reiner Wiederholungen wird die Offenbarung dieser Anmeldung hiermit vollumfänglich in den Gegenstand der vorliegenden Anmeldung mit einbezogen. Die Kartusche (1) gemäß WO 2014/198501 können als Membranelement (2) in der vorliegenden Erfindung verwendet werden, wenn die in der WO 2014/198501 als Endkappen ausgeführten Verschlüsse V1 (5a) und V2 (5b) mit entsprechenden Fixierungsmöglichkeiten für das Dichtelement (3), z.B. Bohrlöchern für Schrauben (10), versehen werden. Entsprechende Anpassungen sind für einen Fachmann einfach durchführbar.

### Membranelement (2) mit Hohlfasermembranen und porösem PSR (13)

In einer zweiten besonders bevorzugten Ausführungsform weist das Membranelement (2) neben den zuvor bereits allgemein beschriebenen Merkmalen auf:
- ein, aus einem oder mehreren Segmenten bestehendes, Permeatsammelrohr PSR (13) mit einem vorderen Ende PSRE1 (13a) und einem hinteren Ende PSRE2 (13b),
- mindestens ein Bündel aus Hohlfasermembranen (11) mit einem vorderen Ende ME1 (11a) und einem hinteren Ende ME2 (11b), das/die um ein PSR (13) angeordnet ist/sind, wobei das PSR (13) bzw. alle Segmente des PSRs (13) zwischen ME1 (11a) und ME2 (11b) eine oder mehrere Öffnungen oder Poren aufweist, die dafür sorgen, dass das PSR (13) in Fluidkommunikation mit dem Zwischenraum zwischen Membran (11), PSR (13) und impermeabler Barriere (6) steht,
- einen ersten Vergussabschnitt VA1 (14a) an ME1 (11a) und PSRE1 (13a) sowie einen zweiten Vergussabschnitt VA2 (14b) an ME2 (11b) und PSRE2 (13b), wobei die Kerne der Hohlfasermembranen zumindest an ME1 (11a), bevorzugt an ME1 (11a) und ME2 (11b), geöffnet sind,
- einen vorderen Verschluss V1 (5a) mit mindestens einer Fluideintrittsöffnungen bzw. -austrittsöffnung in das bzw. aus dem Membranelement (2), bevorzugt einer Fluideintrittsöffnung für das zu trennende Fluidgemisch in das Membranelement (2),
- einen hinteren Verschluss V2 (5b) mit mindestens einer mit mindestens einer Fluideintrittsöffnungen bzw. -austrittsöffnung in das bzw. aus dem Membranelement (2), bevorzugt Fluidaustrittsöffnung für das Retentat aus dem Membranelement (2).

Das Funktionsprinzip dieser Kartuschen (1) basiert darauf, dass das zu trennende Fluidgemisch an V1 (5a) in die Kerne der Hohlfasermembranen eintritt. Zwischen VA1 (14a) und VA2 (14b) permeiert dann die leichter permeierende Komponente des Fluidgemisches durch die Membranen in den Hohlraum zwischen impermeabler Barriere und Hohlfasermembran. Von dort wird dieses Permeat durch die Löcher im PSR (13) ins Innere des PSR (13) geleitet und durch dieses abgeführt. Das Retentat tritt an ME2 (11b) bzw. V2 (5b) aus dem Membranelement (2) aus. VA1 (14a) und VA2 (14b) verhindern eine Rückvermischung des Permeats mit dem Feedstrom bzw. dem Retentatstrom. Die impermeable Barriere (6) ist in diesem Fall zwischen VA1 (14a) und VA2 (14b) durchgehend impermeabel ausgeführt.

Das Dichtelement (3) ist in diesem Fall bevorzugt am vorderen Verschluss V1 (5a), alternativ aber auch am Hinteren Verschluss V2 (5b), fixiert um zu verhindern, dass Teile des Feedstroms, d.h. des zu trennenden Gasgemisches, zwischen der äußeren Oberfläche der impermeablen Barriere (6) und der inneren Oberfläche des Modulgehäuses (4) hindurchströmen und sich mit dem Retentatstrom vermischen.

### Membranelement (2) mit Hohlfasermembranen und zwischen VA1 (14a) und VA2 (14b) fluiddichter PSR (13)

In einer dritten, ganz besonders bevorzugten Ausführungsform weist das Membranelement (2) neben den zuvor bereits allgemein beschriebenen Merkmalen auf:
- ein, aus einem oder mehreren Segmenten bestehendes, Permeatsammelrohr PSR (13) mit einem vorderen Ende PSRE1 (13a) und einem hinteren Ende PSRE2 (13b),
- mindestens ein Bündel aus Hohlfasermembranen (11) mit einem vorderen Ende ME1 (11a) und einem hinteren Ende ME2 (11b), das/die um ein PSR (13) angeordnet ist/sind, wobei das PSR (13) bzw. alle Segmente des PSR (13) im Bereich zwischen ME1 (11a) und ME2 (11b) für das zu trennende Fluidgemisch undurchlässig ausgestaltet ist/sind,
- einen ersten Vergussabschnitt VA1 (14a) an ME1 (11a) und PSRE1 (13a) sowie einen zweiten Vergussabschnitt VA2 (14b) an ME2 (11b) und PSRE2 (13b), wobei die Holfasern an ME1 (11a) in VA1 (14a) derart eingeschlossen sind, dass die Kerne der Hohlfasermembranen geöffnet sind und die Holfasern an ME2 (11b) in VA2 (14b) derart eingeschlossen sind, dass sie verschlossen sind,
- eine für das zu trennende Fluidgemisch impermeable Barriere (6), die die Anordnung aus PSR (13) und Hohlfasermembranen (11) im Bereich zwischen VA1 (14a) und VA2 (14b) umschließt, wobei die impermeable Barriere (6), bezogen auf die Längsachse der Kartusche, im ersten Drittel, bevorzugt im ersten Viertel der Strecke zwischen VA1 (14a) und VA2 (14b), besonders bevorzugt im Abstand von 0 bis 10 cm hinter der inneren Stirnseite von VA1 (14ai) und ganz besonders bevorzugt im Abstand von 2 bis 4 cm hinter der inneren Stirnseite von VA1 (14ai) so ausgestaltet ist, dass eine oder mehrere Fluideintrittsöffnung/en oder -spalte (12), in den Zwischenraum zwischen der impermeablen Barriere (6), den Hohlfasermembranen und dem PSR (13), vorhanden sind,
- eine vordere Endkappe EK1, als vorderer Verschluss V1 (5a), die über VA1 (14a) angeordnet ist und optional eine hintere Endkappe EK2, die sofern vorhanden, über VA2 (14b) angeordnet ist, wobei VA2 (14b) oder wenn vorhanden EK2 den hinteren Verschluss V2 (5b) ausbildet,
und ist besonders dadurch gekennzeichnet, dass
- EK1 derart ausgestaltet und über VA1 (14a) angeordnet ist, dass zwischen der äußeren Stirnseite von VA1 (14aa), an der das Permeat aus den Hohlfaserkernen ausströmt, und der inneren Oberfläche der Endkappe EK1 ein EK1-Hohlraum (15) gebildet wird,
- im Bereich des EK1-Hohlraums (15) Permeataustrittsöffnungen (16) im PSR (13) bzw. in einem Segment des PSRs (13) vorhanden sind, so dass eine Fluidkommunikation zwischen dem Fluid im EK1-Hohlraum (15) und dem Inneren des PSR (13) gegeben ist,
- mindestens eine Austrittsöffnung (17) für das Retentat im letzten Viertel der Strecke zwischen VA1 (14a) und VA2 (14b) oder eingebettet in VA2 (14b), vorhanden ist, wobei EK2, sofern vorhanden, ebenfalls mindestens eine Austrittsöffnung (18) für das Retentat aufweist.

Ein Beispiel für eine solche Kartusche (1) inklusive Membranelement (2) und Dichtelement (3) findet sich in Abbildung 2. Die dort abgebildete Ausführungsform ist besonders bevorzugt, da mit dieser Anordnung besonders effiziente großvolumige Kartuschen (1), die bei hohen Drücken betrieben werden können, hergestellt werden können.

Eine Kartusche, wie in Abbildung 2 gezeigt, jedoch ohne Dichtelement (3), d.h. mit direkt an der Kartusche angebrachter Dichtung (8), wird in der europäischen Patentanmeldung EP 15171206 offenbart. Der Inhalt dieser Anmeldung wird zur Vermeidung reiner Wiederholungen hiermit vollumfänglich in die Beschreibung dieser Anmeldung mit aufgenommen.

In den zuvor genannten Ausführungsformen kann ein aus einem Stück gefertigtes PSR (13) pro Membranelement (2) verwendet werden. Die Aufteilung in mehrere Segmente, wie in Abbildung 2 dargestellt, kann jedoch Produktionstechnische Vorteile haben.

Besteht das PSR (13) einer Kartusche (1) aus mindestens zwei Segmenten (20) und (21), so ist es bevorzugt, dass das erste Segment (20) an PSRE1 (13a) beginnt und bis mindestens in VA1 (14a) hineinreicht und dort mit einem zweiten Segment (21) verbunden ist, dass alleine oder in Verbindung mit weiteren Segmenten den Rest des PSR (13) bis hin zu PSRE2 (13b) ausbildet, und besonders bevorzugt, dass das erste Segment (20) die Permeataustrittsöffnungen (16) in das PSR (13) umfasst. Ein Beispiel dafür wird in Abbildung 2 gezeigt. Diese Anordnung hat produktionstechnische Vorteile, da, wie weiter unten in Beispiel 1 erläutert werden wird, der VA1 (14a) nach dessen Herstellung aufgeschnitten werden muss, um die Kerne der Hohlfasermembranen zu öffnen. Wird ein geteiltes PSR (13) verwendet, so kann der VA1 (14a) einfach, z.B. mit einer Säge durchtrennt werden. Nach diesem Schritt können dann die Segmente (20) und (21) zusammengesetzt werden. Wird ein einteiliges PSR (13) verwendet, so hätte dies in der Ausführungsform nach Abbildung 2 den Nachteil, dass eine aufwändigere Schnittmethode für VA1 (14a) gewählt werden müsste, die das PSR (13) bei diesem Arbeitsschritt nicht mit durchtrennt. Ferner hat die geteilte Ausführung des PSR (13) nach Abbildung 2 den Vorteil, dass zunächst die Endkappe EK1 (5a) aufgesetzt und danach das Segment (20) eingeführt werden kann und das Segment (20) durch dessen feste Verbindung mit Segment (21) die EK1 (5a) im Membranelement (2) fixiert.

Weitere Details und bevorzugte Ausgestaltungsformen dieser Ausführungsform werden weiter unten im Zusammenhang mit der Beschreibung eines erfindungsgemäßen Fluidseparationsmmoduls (7), in dem solche Kartuschen (1) beispielhaft verwendet werden, beschrieben.

### Membranelement (2) mit Flachmembranen

Werden Flachmembrane verwendet, so weist das Membranelement (2) bevorzugt auf:
- ein, aus einem oder mehreren Segmenten bestehendes, Permeatsammelrohr PSR (13) mit einem vorderen Ende PSRE1 (13a) und einem hinteren Ende PSRE2 (13b),
- einen vorderen Verschluss V1 (5a) mit mindestens einer Fluideintrittsöffnung oder -austrittsöffnung, bevorzugt einer Fluideintrittsöffnung für das zu trennende Fluidgemisch
- einen hinteren Verschluss V2 (5b) mit mindestens einer Fluideintrittsöffnung oder -austrittsöfnung, bevorzugt einer Austrittsöffnung (18) für das Retentat.
- eine Membranwicklung umfassend
   ∘ eine oder mehrere Flachmembranen (11),
   ∘ eine oder mehrere poröse Feedkanal-Platzhalterlagen (22), mit einer vorderen Kante ME1 (11a), auf der Seite von V1 (5a), an der bevorzugt das zu trennende Fluidgemisch zugeführt wird, und einer hinteren Kante ME2 (11b), auf der Seite von V2 (5b), an der bevorzugt das Retentat ausgeführt wird,
   ∘ eine oder mehrere Permeatkanal-Platzhalterlagen (23), durch die bevorzugt das Permeat zum, im zentral im Kern der Wicklung angeordneten, PSR (13) geführt wird,
      wobei
   ∘ zwischen einer Feedkanal-Platzhalterlage (22) und einer Permeatkanal-Platzhalterlage (23) immer mindestens eine Membranlage (11) vorhanden ist und das PSR (13) eine oder mehrere Öffnungen oder Poren für das Permeat aufweist.

Ein Beispiel für ein entsprechendes Membranelement (2) findet sich in Abbildung 4. Die Herstellung solcher Wickelelemente ist allgemein bekannt. Beispiele hierfür finden sich in der EP 0 492 250 A1 und der WO2012122207A1. Zur Vermeidung reiner Wiederholungen wird der Inhalt dieser Publikationen hiermit explizit in den Gegenstand der Beschreibung der vorliegenden Anmeldung mit aufgenommen.

### Fluidseparationsmodule

Die vorliegende Erfindung umfasst neben den zuvor beschriebenen Kartuschen (1) auch Fluidseparationsmodule (7), die eine oder mehrere der besagten Kartuschen (1) enthalten.

Bevorzugte Ausgestaltungsformen der erfindungsgemäßen Fluidseparationsmodule (7) umfassen
- ein druckfestes Modulgehäuse (4) mit einem Fluideinlass (24) sowie einem Permeatauslass (25) und einem Retentatauslass (26),
- im druckfesten Gehäuse (4) angeordnet, eine Kartusche (1) oder mehrere zu einer Kartuschenkette zusammengeschlossene erfindungsgemäße Kartusche(n) (1),
- eine Verbindung des Permeatauslasses (25) des Modulgehäuses (4) mit PSRE1 (13a), der dem Permeatauslass des Gehäuses (4) nächstgelegenen Kartusche ((1a) in Abbildung 3),
wobei
- der Retentatauslass am Modulgehäuse (26) stromabwärts der Retentatauslassöffnungen (17) und/oder (18) der hintersten Kartusche ((1b) in Abbildung 3) im Gehäuse (4) angeordnet ist,
- eine Fluidbarriere (27), d.h. einen fluiddichten Verschluss des PSR (13), die im Bereich des PSRE2 (13b) der Kartusche bzw. wenn mehrere Kartuschen zu einer Kartuschenkette zusammengeschaltet werden, des PSRE2 (13b) der hintersten Kartusche der Kartuschenkette, angeordnet ist.

Ein bevorzugtes Beispiel für ein erfindungsgemäßes Fluidseparationsmodul (7) mit einer Kartuschenkette aus zwei erfindungsgemäßen Kartuschen (1a) und (1b) gemäß Abbildung 2 ist in Abbildung 3 gezeigt. Bezug nehmen auf Abbildung 3 umfasst das erfindungsgemäße Fluidseparationsmodul (7) ein Gehäuse (4) in dem sich z.B. zwei erfindungsgemäße Kartuschen (1a) und (1b) befinden. Das zu trennende Fluidgemisch tritt durch den Fluideinlass des Moduls (24) in das Innere des Gehäuses (4) ein. Anschließend wird das Fluidgemisch durch einen Spalt (28), der zwischen der Endkappe EK1 (5a) der ersten Kartusche (1a) und der Innenwand des Modulgehäuses (4) vorhanden ist, zur Fluideintrittsöffnung (12) der Kartusche (1a) geleitet. Die Kartusche (1a) entspricht Abbildung 2 und besteht aus einem in der Längsachse angeordneten Permeatsammelrohr PSR (13) um das herum ein Bündel von Hohlfasermembranen (11) (der Übersichtlichkeit halber in Abbildung 3 nicht dargestellt) angeordnet ist. Die Hohlfasern weisen ein vorderes Ende ME1 (11a) und ein hinteres Ende ME2 (11b) auf. Das vordere Ende ME1 (11a) ist in den ersten Vergussabschnitt VA1 (14a) derart eingegossen, dass die Kerne der Hohlfasern geöffnet sind, d.h. dass das Permeat an der äußeren Stirnseite von VA1 (10a) aus den Hohlfasern austreten kann (siehe Abbildung 2). Das hintere Ende der Hohlfasern ME2 (11b) ist in einen zweiten Vergussabschnitt VA2 (14b) eingegossen und zwar derart, dass die Hohlfaserkerne verschlossen sind, d.h. dass kein Permeat auf dieser Seite aus den Hohlfasern austreten kann (siehe Abbildung 2). Die Anordnung aus PSR (13) und Hohlfasermembranbündel (11) wird zwischen VA1 (14a) und VA2 (14b) durch eine impermeable Barriere (6), abgesehen von der Fluideintrittsöffnung (12), vollständig umschlossen. Das zu trennenende Fluidgemisch wird also durch die Fluideintrittsöffnung (12) in den Zwischenraum zwischen PSR (13), den Hohlfasermembranen (11) und der impermeablen Barriere (13) gepresst. Es kommt dort in Kontakt mit der Außenhülle der Hohlfasermembranen (11).

Durch eine Druckdifferenz des Fluids in besagtem Zwischenraum (Hochdruckbereich) und dem Kern der Hohlfasermembranen (Niederdruckbereich) permeiert eine größere Menge des leichter permeierenden Fluid des zu trennenden Fluidgemisches ggf. zusammen mit einem kleineren Teil des schwerer permeierenden Fluids durch die Hohlfasermembran und bildet im Kern der Hohlfasermembran das Permeat. Das leichter permeierende Fluid ist somit im Permeat, im Vergleich mit dem zu trennenden Fluidgemisch angereichert.

Das Permeat wird nun durch den Kern der Hohlfasermembranen, durch den VA1 (14a) hindurch in einen Hohlraum (EK1-Hohlraum (15)) geleitet, der zwischen der inneren Oberfläche der EK1 (5a) und der äußeren Stirnseite des VA1 (14aa) gebildet wird. Der EK1-Hohlraum (15) steht zudem in Fluidkommunikation mit dem PSR (13), d.h. aus dem EK1-Hohlraum (15) kann das Permeat durch Öffnungen (16) in das Innere des PSR (13) gelangen (siehe Abbildung 2). Von dort wiederum wird das Permeat der ersten Kartusche (1a), zusammen mit dem der weiteren Kartuschen im selben Gehäuse (3), durch den Permeatauslass des Moduls (6) (in den Abbildungen nicht dargestellt) aus dem Modul (7) ausgeschleust.

Im EK1-Hohlraum (15) befindet sich vorzugsweise mindestens ein Stützelement (15a). Mit Hilfe eines Stützelements (15a) kann die Verteilung des Permeatgases in Richtung der Öffnungen (16) des Permeatsammelrohrs (13) optimiert werden. Bei geeigneter Ausführung kann das Stützelement (15a) zudem dazu beitragen die mechanische Stabilität der Kartusche zu verbessern, insbesondere bei hohen Drücken des zu trennenden Fluidgemisches. Weiterhin kann durch die Verwendung eines geeigneten Stützelementes (15a) der Druckverlust durch Expansion der Permeatfluide aus den Kernen der Hohlfasermembranen in den EK1-Hohlraum (15) zusätzlich reguliert werden. Um das Permeat aus den Kernen der Hohlfasermembranen in Richtung der Öffnungen (16) zu leiten kann das Stützelement (15a) im einfachsten Fall derart ausgestaltet sein, dass es den größten Teil des EK1-Hohlraums (15) ausfüllt und zwischen der dem VA1 (14a) zugewandten Seite des Stützelements (15a) und dem VA1 (14a) ein Spalt entsteht, durch den das Permeatgas geleitet wird. Bevorzugt wird das Stützelement (15a) jedoch aus einem porösen Material gefertigt und/oder weist interne und/oder externe Kanäle auf, wobei die Poren bzw. Kanäle bevorzugt derart ausgestaltet sind, dass das Permeatgas in die richtige Richtung gelenkt wird. Um die Verteilung des Permeatgases in Richtung der Öffnungen (16) besonders positiv beeinflussen zu können, weist das Stützelement (15a) besonders bevorzugt eine äußere Form auf, die geeignet ist das Permeat von den Austrittsöffnungen der Hohlfasermembranen zu den Öffnungen (16) zu leiten. Eine beispielhafte Ausführungsform dafür ist in Abbildung 2 zu sehen. Der EK1-Hohlraum (15) ist in Abbildung 2 mit einem Stützelement (15a) gefüllt. Das Stützelement (15a) weist an der dem VA1 (14a) zugewandten Seite ein Profil (15b), genauer gesagt Kanäle (15b), auf durch die das Permeat von den Kernen der Hohlfasermembranen zur Öffnung (16) geleitet wird. Ebenfalls bevorzugt kann zwischen einem Stützelement (15a), mit oder ohne Profil (15b), und dem VA1 (14a) ein Filterelement (in Abb. 2 nicht dargestellt), z.B. ein Gewebe, ein Vlies oder eine Sintermetallplatte, eingebaut werden, das zusätzlich dabei unterstützt, dass das Permeat zur Öffnung (16) geleitet wird. Analoge technische Ausgestaltungsformen, z. B. das Stützelement (15) als fest in die vordere Endkappe (5a) integriertes Teil auszuführen und nicht als isoliertes Teil, die die gleiche Funktionalität aufweisen sind für einen Fachmann leicht auffindbar.

Bevorzugt besteht das Stützelement (15a) aus korrosionsbeständigen Materialien, besonders bevorzugt aus Edelstahl. Ganz besonders bevorzugt besteht das Stützelement (15a) aus dem gleichen Material wie die Endkappe (5a). Ebenfalls besonders bevorzugt ist das Stützelement (15a), wie zuvor angedeutet, ein integraler Bestandteil der EK1 (5a)

Besonders bevorzugte Filterelemente bestehen aus korrosionsbeständigen Materialien wie Edelstahl, aber auch aus Bronze, Messing oder Aluminium.

Ganz besonders bevorzugt weist das Filterelement Poren oder Kanäle mit einem Durchmesser auf, die mindestens um einen Faktor 5 bis 10 kleiner sind wie der Innendurchmesser der Hohlfasermembranen, so dass das Permeat frei fließen kann und nicht blockiert wird.

Durch die o.g. Permeation des leichter permeierenden Fluids in den Kern der Hohlfasermembranen wird das langsamer permeierenden Fluid im Zwischenraum zwischen PSR (13) und impermeabler Barriere (6) angereichert. Aus dem zu trennenden Fluidgemisch entsteht dort das Retentat welches in besagtem Zwischenraum in Richtung VA2 (14b) geleitet wird und sich in dieser Zeit immer weiter mit dem schwerer permeierenden Fluid anreichert. VA2 (14b) wird bevorzugt von der zweiten Endkappe EK2 (5b) (siehe Abbildung 2) umgeben.

Die erfindungsgemäße Kartusche (1) wird durch das Dichtelement (3), welches an EK2 (5b) fixiert ist, fluiddicht mit der Innenwand des Modulgehäuses (4) verbunden, um das zu trennende Fluidgemisch (Feedstrom) vom aus der Kartusche (1) hinter EK2 (5b) austretenden Retentatstrom zu trennen.

Durch das Dichtelement (3) wird, wie bereits angedeutet, verhindert, dass sich das zu trennende Fluidgemisch mit dem Retentat der ersten Kartusche (1a) vermischt. Das Retentat strömt nämlich durch Retentatauslässe (17) und (18) (siehe Abbildung 2), die im VA2 (14b) und in der EK2 (5b) vorhanden sind, durch das Trägerelement (9) aus der ersten Kartusche (1a) heraus in den Innenraum (29) des Gehäuses (4), der sich zwischen Kartusche (1a) und Kartusche (1b) befindet.

Das Retentat der ersten Kartusche (1a) wird in der zweiten Kartusche (1b), die analog zur ersten Kartusche (1a) funktioniert und aufgebaut ist, weiter auf konzentriert, d.h. bildet dort das zu trennende Fluidgemisch.

Das PSR (13) der zweiten Kartusche (1b) ist mit dem PSR (13) der ersten Kartusche (1a) an der Verbindungsstelle (30) verbunden, so dass sich ein gemeinsames PSR (13) ergibt, dass vom vorderen Ende PSRE1 (13a) des Permeatsammelrohrs der Kartusche (1a) bis zum hinteren Ende PSRE2 (13b) des PSRs (13) der Kartusche (1b) erstreckt.

Am Ende des so zusammengeschlossenen PSR (13) befindet sich die Fluidbarriere (27), die bevorzugt im Bereich der VA2 (14b) der hintersten Kartusche der Kartuschenkette angeordnet ist, und die aus jedem beliebigen fluiddichten, insbesondere gasdichten und hinreichend druckfesten Material hergestellt werden kann. Hinreichend druckfest bedeutet, dass die Permeatbarriere (27) der Druckdifferenz zwischen dem Permeatdruck im PSR (13) und dem Retentatdruck im Endhohlraum (31) aushalten muss. Ferner muss die Fluidbarriere die entsprechenden Betriebstemperaturen aushalten können. Die Fluidbarriere (31) besteht daher vorzugsweise aus Metall oder Kunststoff und ist bevorzugt durch Verschrauben oder per Flansch oder durch Wiederhaken oder durch kleben am PSR (13) fixiert. Entsprechende technische Lösungen sind für den Fachmann einfach auffindbar. Im zusammengekoppelten Permeatsammelrohr (13) werden die gesamten Permeatströme beider Kartuschen (1a) und (1b) gemeinsam abgeführt.

Die Verbindung (30) zwischen den Permeatsammelrohren (13) der jeweiligen Kartuschen (1) kann auf unterschiedliche Weise erfolgen. So können die hinteren und vorderen Enden der Permeatsammelrohre PSRE1 (13a) und PSRE2 (13b) als Flansch- oder als Steck- oder als Schraubverbindung ausgeführt werden. Alternative Verbindungsmöglichkeiten, z.B. Widerhakensysteme, sind für einen Fachmann leicht auffindbar.

Analog zur Kartusche (1a) weist die Kartusche (1b) an ihrem hinteren Ende einen zweiten VA2 (14b) und vorzugsweise eine EK2 (5b) auf. Durch die Retentatauslassöffnungen (17) in VA2 (14b) und sofern eine EK2 (5b) vorhanden ist, durch (18) in EK2 (5b) gelangt das Retentat der zweiten Kartusche (1b) in den Endhohlraum (11) des Modulgehäuses (4). Der Endhohlraum (31) wird gebildet durch die äußere Stirnseite des VA2 (14bi) oder, sofern vorhanden, der EK2 (5b) der zweiten Kartusche(1b) und der Innenwand des Modulgehäuses (4), die sich hinter der zweiten Kartusche (1b) befindet. Dadurch, dass auch die zweite Kartusche (1b) durch ein Dichtelement (3) (in Abbildung 3 nicht dargestellt) fluiddicht mit der Innenwand des Modulgehäuses (4) verbunden ist und zudem das PSR (13) die Permeatbarriere (27) aufweist, wird erreicht, dass im Endhohlraum (31) nur das nach mehreren Trennschritten erhaltene Rententat vorhanden ist, welches durch den Retentatauslass (26) aus dem Modulgehäuse (4) ausgeschleust wird.

Das erfindungsgemäße Modul (7) nach Abbildung 3 zeichnet sich somit dadurch aus, dass das ursprünglich zu trennende Fluidgemisch in zwei nacheinander geschalteten Trennschritten, erst in Kartusche (1a) und dann in der zweiten Kartusche (1b) aufgetrennt wird. Alle Permeatströme werden kombiniert und über das PSR (13) zum Permeatauslass (25) des Moduls (7) geführt, der sich an der vorderen Abdeckung (32) des Gehäuses befindet ((25) und (32) in Abbildung 3 nicht dargestellt) und über diesen aus dem Modul (7) ausgeschleust. Die vordere Abdeckung (32) wird nach befüllen des Moduls mit den Kartuschen aufgesetzt und über die in Abbildung 3 sichtbaren Schraubenlöcher mit dem Gehäuse (4) verschraubt. Auch für das Retentat ist nur ein Auslass (26) am Modulgehäuse (4) nötig. Da vorzugsweise alle Kartuschen gleich aufgebaut sind, kann die Kartuschenkette, bei hinreichend langem Modulgehäuse (4), beliebig verlängert werden, in dem zwischen Kartusche (1a) und Kartusche (1b) weitere erfindungsgemäße Kartuschen (1) zwischengeschaltet werden.

Fluidseparationsmodule (7) enthaltend die erfindungsgemäßen Kartuschen (1) haben den Vorteil, dass das Modulgehäuse (4) dauerhaft in der Separationsanlage verbleiben kann und nur verbrauchte Kartuschen (1) gewechselt werden müssen. Der Kartuschenwechsel wiederum ist sehr einfach und schnell, da die Kartuschenkette als Ganzes aus dem Gehäuse genommen werden kann. Somit werden bei großen Anlagen mit mehreren hundert oder tausend Modulgehäusen, sehr geringe Stillstandszeiten sichergestellt und die Wartungskosten minimiert.

Durch den speziellen Aufbau der erfindungsgemäßen Kartuschen (1) ist es zudem leicht möglich verschiedene Membranelemente (2) zu verwenden, auch wenn die jeweiligen Membranelemente (2) selbst nicht den passenden Durchmesser haben. Das kann durch die erfindungsgemäßen Dichtelemente (3) ausgeglichen werden.

Wie bereits erwähnt umfassen die erfindungsgemäßen Kartuschen (1) in der bevorzugten Ausgestaltungsform gemäß Abbildung 2 ein Permeatsammelrohr PSR (13), das im Zwischenraum zwischen VA1 (14a) und VA2 (14b), der jeweiligen Kartusche (1), für das zu trennende Fluidgemisch undurchlässig ausgestaltet ist. Andernfalls würde sich, wie oben beschrieben, das zu trennende Fluidgemisch, das sich im Zwischenraum zwischen PSR (13) und impermeabler Barriere (6) befindet, wieder mit dem Permeat im PSR (13) vermischen

Im Bereich des EK1-Hohlraums (15) muss das PSR (13) in dieser Ausführungsform hingegen mit dem Fluid im EK1-Hohlraum (15) in Fluidkommunikation stehen, so dass das Permeat dort in das PSR (13) eintreten kann. Bevorzugt weist das PSR (13) daher in diesem Bereich Öffnungen (16) auf (siehe Abbildung 2). Hinsichtlich Größe, Form und Anzahl der Öffnungen gibt es keine besonderen Anforderungen, sofern eine hinreichende Fluidkommunikation gewährleistet ist.

In der impermeablen Barriere (6) sind in dieser bevorzugten Ausführungsform wie gesagt Fluideintrittsöffnungen (12) vorhanden bzw. die impermeable Barriere (6) erstreckt sich nicht über die ganze Strecke zwischen VA1 (14a) und VA2 (14b), so dass sich als Fluideintrittsöffnung ein Spalt ergibt. Die Fluideintrittsöffnungen (14) sind, bezogen auf die Längsachse der Kartusche (1), im ersten Drittel, bevorzugt im ersten Viertel der Strecke zwischen VA1 (14a) und VA2 (14b), besonders bevorzugt im Abstand von 0 bis 10 cm hinter der inneren Stirnseite (14ai) von VA1 (14a) und ganz besonders bevorzugt im Abstand von 2 bis 4 cm hinter der inneren Stirnseite (14ai) von VA1 (14a) angeordnet. Dadurch wird Totvolumen verhindert und die Trennfläche der Membranen maximal ausgenutzt.

Am hinteren Ende des Membranbündels ME2 (11b) in der Ausführungsform nach Abbildung 2 befindet sich der zweite Vergussabschnitt VA2 (14b). Auf dieser Seite ist es in dieser Ausführungsform nicht beabsichtigt, dass Permeat aus den Hohlfaserkernen austritt. Daher werden die Hohlfasern hier derart in das Gießharz eingegossen, dass alle Hohlfaserkerne am hinteren Ende des Hohlfaserbündes ME2 (11b) verschlossen werden.

Auf der Seite des VA2 (14b) muss das Retentat aus der Kartusche austreten können. Es ist daher bevorzugt in VA2 (14b) eingegossene Retentatauslassöffnungen (17) vorzusehen, durch die das Retentat austreten kann.

Analog zur EK1 (5a) ist die EK2 (5b) entweder fest mit dem PSR (13) oder einem Segment (20) oder (21) des PSR (13) verbunden oder weist an ihrer Stirnseite eine Öffnung auf, durch die das PSR (13) bzw. das PSR-Segment (20) oder (21) eingeführt werden kann.

Das Modulgehäuse (4) muss druckfest ausgeführt werden und besteht in der Regel aus Metall, bevorzugt aus Stahl, besonders bevorzugt aus C-Stahl.

Die erfindungsgemäße Module (7) und Kartuschen (1) können in beliebigen Größen gebaut und verwendet werden. Der Durchmesser der Kartuschen (1) liegt bevorzugt im Bereich von 7 bis 9 Zoll, bevorzugt 7,5 bis 8,5, besonders bevorzugt von 7,75 bis 8,5 Zoll, ganz besonders bevorzugt von 8,0 bis 8,25 Zoll. Die Länge der Kartuschen von PSRE1 (13a) bis PSRE2 (13b) beträgt bevorzugt 0,5 bis 2 m, besonders bevorzugt 1 bis 2m, ganz besonders bevorzugt 1,1 bis 1,5m und am meisten bevorzugt 1,3 bis 1,4 m.

Die erfindungsgemäßen Module (7) und Kartuschen (1) können bei Drücken im Bereich von 1 bis 150 bar, bevorzugt 30 bis 120 bar und besonders bevorzugt 40 bis 100 bar verwendet werden. Die Betriebstemperaturen betragen vorzugsweise -10 bis 100 °C und besonders bevorzugt 30 bis 95 °C.

Die erfindungsgemäßen Module (7) und Kartuschen (1) werden bevorzugt zur Auftrennung von CO₂/CH₄ (z.B. Biogas, Erdgas oder Shale Gas Aufbereitung), H₂-Strömen z.B. Syngas ratio adjustment, Rückgewinnung von H₂ oder He-Rückgewinnung aus Source Gas verwendet.

Die nachfolgenden Beispiele dienen zur näheren Erläuterung und zum besseren Verständnis der vorliegenden Erfindung, schränken diese jedoch in keiner Weise ein.

### Beispiel 1:

Zunächst wurden Hohlfasermembranen aus P84HT gemäß Beispiel 18 der WO 2011/009919 A1 hergestellt. Die Hohlfasern wurden um ein Rohr mit einem Innendurchmesser von 43 mm und einem Außendurchmesser von 51 mm und einer Länge von 1750 mm gewickelt, das später das zweite, d.h. hintere Segment (21) des Permeatsammelrohrs (13) bildete.

Die Wicklung der ersten Lage erfolgte schraubenlinienförmig vom vorderen Ende des Rohres zum hinteren Ende. Dort wurde die Membran mehrere Male im 90° Winkel zur Rohrlängsachse gewickelt und danach die zweite Lage schraubenlinienförmig vom hinteren zum vorderen Rohrende gewickelt. Auch hier erfolgten einige Wicklungen im 90° Winkel zur Rohrlängsachse, gefolgt von der dritten Lage, die jetzt wieder schraubenlinienförmig vom vorderen zum hinteren Ende des Rohres gewickelt wurden. In der beschriebenen Art und Weise wurde Lage für Lage gewickelt, bis ein Faserbündel mit einem Durchmesser, in der Mitte des Rohres, von 190 mm entstanden war.

Das Hohlfaserbündel wurde danach für 60 min bei 315°C in N2-Atmosphäre getempert. Nach dem Abkühlen wurde an beiden Enden der Wicklung das Bündel mit einem Band, unmittelbar vor den Stellen an denen im 90° Winkel gewickelt wurde, fixiert und hinter der Fixierung jeweils abgeschnitten.

Die so erhaltene Anordnung aus Rohr und Hohlfaserbündel wurde in einen Nylon Strickschlauch und danach in einen Schrumpfschlauch aus PVC geschoben (impermeable Barriere (6)), der in seiner Länge der Länge des gekürzten Faserbündels entsprach und der im ersten Drittel seiner Länge 8 Fluideintrittsöffnungen (12) aufwies. Der Schlauch wurde bei 100°C in 10 Minuten auf das Faserbündel (11) aufgeschrumpft.

Die so erhaltene Anordnung wurde in einer Zentrifuge befestigt und an beiden Enden Gussformen angebracht, die wiederum jeweils mit einem Einlass für das Gießharz versehen waren. Die Gussform am hinteren Ende des Membranbündels (ME2 (11b)), d.h. am gegenüberliegenden Ende der Fluideinlässe des Schrumpfschlauchs (impermeable Barriere (6)), wies Dornen auf, die in das Faserbündel eingeschoben wurden und die beim späteren Guss die Retentataustrittsöffnungen (17) im Vergussabschnitt VA2 (14b) bildeten. Die Gussformen wurden mit einem Trennmittel versehen um sie nach dem Guss einfacher vom jeweiligen Vergussabschnitt lösen zu können.

Vor dem Aufsetzen der permeatseitigen Gussform für VA1 (14a), d.h. auf der Seite auf der später das Permeat aus den Hohlfaserkernen austreten soll (ME1 (11a)), wurden die Faserenden mit einem Hochtemperaturwachs behandelt um ein zu tiefes Einsaugen des Gießharzes zu verhindern.

Die Menge des Gießharzes wurde so berechnet, dass die Gussformen auf beiden Seiten jeweils voll befüllt wurden.

Unter Zentrifugation wurden nun bei Raumtemperatur (<25°C) die beiden Vergussabschnitte VA1 (14a) und VA2 (14b) gebildet. Die Vergussabschnitte wurden danach für 4 Stunden bei 100°C nachgetempert und die Gussformen nach dem Abkühlen der Vergussabschnitte abgenommen. Der Vergussabschnitt VA1 (14a) wurde mit einer Kreissäge an einer Stelle, senkrecht zur Mittelachse der Kartusche und 5 mm über dem diesseitigen Ende des PSR (13), durchtrennt, wodurch die Hohlfaserkerne auf der Permeatseite geöffnet wurden. Dadurch wurden die späteren Permeatauslässe im, nach Aufsetzen der EK1 (5a) entstehenden, EK1-Hohlraum (15) hergestellt.

Das so erhaltene Membranelement (2) mit den am VA1 (14a) geöffneten Hohlfasern wurde, wie durch Beaufschlagung mit einem Testgas, auf defekte Membranen getestet und defekte bzw. gebrochene Fasern mit Epoxid Harz verschlossen.

Danach wurden die beiden Endkappe EK1 (5a) und EK2 (5b) aufgesetzt, wobei die hintere Endkappe EK2 (5b) Rententatauslässe (18) und Fixierungsstellen für die Schrauben (10) aufwies. An die Endkappe VA2 (14b) wurde danach wie in Abbildung 2 gezeigt ein Dichtelement (3) bestehend aus einem Trägerring (9) und einem O-Ring (8) mittels mehrerer Schrauben (10) fixiert. In Abbildung 2 ist der Übersichtlichkeit halber nur eine Schraube (10) gezeigt.

Die vordere Endkappe EK1 (5a) war derart ausgebildet und präpariert, dass nach dem überstülpen über VA1 (14a) der EK1-Hohlraum ((15), siehe Abbildung 2) mit einer Metallplatte als Stützelement (15a) und einem zwischen dem Stützelement und der diesem zugewandten Oberfläche des VA1 (14a) angeordneten Sintermetallgewebe gefüllt war. Das Stützelement (15a) wiederum war an der dem Sintermetallgewebe zugewandten Seite profiliert, so dass durch die Kanäle im Profil (15b) das Permeat von den Kernen der Hohlfasermembranen (11) zu den Permeataustrittsöffnungen (16) im vorderen Segment (20) des Permeatsammelrohrs (13) geleitet wird.

Durch eine Öffnung in der Stirnseite der vorderen Endkappe EK1 (5a) wurde danach das vordere Segment (20) des Permeatsammelrohrs (13) eingesetzt und mit dem bereits in der Kartusche befindlichen hinteren Segment (21) innerhalb von VA1 (14a), an der Verbindungsstelle (19) verschraubt (siehe Abbildung 2). Besagtes vorderes Segment (20) wies im Bereich des EK-Hohlraums (15) Permeataustrittsöffnungen (16) auf, durch die später das Permeat aus dem EK1-Hohlraum (15) in das Permeatsammelrohr (13) fließen kann (siehe Abbildung 2).

### Beispiel 2:

Eine nach Beispiel 1 hergestellte Kartusche (1) wurde in einem passenden Test-Modulgehäuse (4) einem Trenn und Stresstest unterzogen.

Dazu wurde bei einer nach Beispiel 1 hergestellten Kartusche das hintere Ende des Permeatsammelrohrs (13(b) mit einem Einschrauber bzw. Blindstopfen verschlossen und somit die Fluidbarriere (27) hergestellt. Danach wurde die Kartusche in das Modulgehäuse eingesetzt und das Gehäuse verschlossen, wobei das vordere Ende des Permeatsammelrohrs (13a) mit dem Permeatauslass (25) des Test-Modulgehäuses (4) verbunden wurde.

Durch den Fluideinlass des Modulgehäuses (24) wurde nun ein Gasgemisch aus 20.9% O₂ und 79.1% N₂ bei 6,7 bara und bei 24°C gepumpt und die Auftrennung des Gasgemisches getestet.

Danach wurde auf der Feedseite der Kartusche (1) dreimal ein Druck von 100 bar angebracht wobei die Permeatseite auf atmosphärischem Druck blieb. Danach wurde der Trenntest noch einmal wiederholt bei den gleichen Bedingungen.

Die Ergebnisse des Trenntests vor und nach dem Stresstest bei 100 bar waren identisch, was beweist dass die erfindungsgemäße Kartusche bei hohen Drücken und hohen Gasvolumen eingesetzt werden kann, d.h. die Kombination aus Membranelement (2) und Dichtelement (3) erfüllen alle Anforderungen.

### Bezugszeichenliste

- 1: Kartusche
- 1a: Kartusche 1
- 1b: Kartusche 2
- 2: Membranelement
- 3: Dichtelement
- 4: Gehäuse des Separationsmoduls
- 5: allgemein für Verschluss des Membranelements (2)
- 5a: vorderer Verschluss V1 des Membranelements (2); Bezeichnung auch verwendet, wenn als spezielle Ausgestaltungsform des Verschlusses V1 dieser als Endkappe EK1 ausgeführt wurde
- 5b: hinterer Verschluss V2 des Membranelements (2); Bezeichnung auch verwendet, wenn als spezielle Ausgestaltungsform des Verschlusses V2 dieser als Endkappe EK2 ausgeführt wurde
- 6: impermeable Barriere
- 7: Fluidseparationsmodul
- 8: Dichtung
- 9: Trägerelement
- 9a: der inneren Oberfläche des Modulgehäuses (4) zugewandten Oberfläche des Trägerelements (9)
- 9b: Bohrlöcher im Trägerelement (9)
- 10: Schraube
- 11: Membran bzw. Membranbündel oder - Wicklung
- 11a: vorderes Membranende ME1
- 11b: hinteres Membranende ME2
- 12: Fluideintrittsöffnung bzw. -spalt des Membranelements (2)
- 13: Permeatsammelrohr
- 13a: Vorderes Ende des Permeatsammelrohrs (13) PSRE1
- 13b: Hinteres Ende des Permeatsammelrohrs (13) PSRE2
- 14a: Vorderer Vergussabschnitt VA1
- 14aa: Äußere Stirnseite des VA1
- 14ai: Innere Stirnseite des VA1
- 14b: Hinterer Vergussabschnitt VA2
- 14ba: Äußere Stirnseite des VA2
- 14bi: Innere Stirnseite des VA2
- 15: EK1-Hohlraum zwischen äußerer Stirnseite von VA1 (14aa) und der inneren Oberfläche von Endkappe EK1 (5a)
- 15a: Stützelement
- 15b: Profil des Stützelements (15a)
- 16: Permeataustrittsöffnungen durch die das PSR (13) in Fluidkommunikation mit dem EK1-Hohlraum (15) steht
- 17: Retentatauslassöffnungen in VA2 (14b)
- 18: Retentatauslass in EK2 (5b)
- 19: Verbindungsstelle zwischen (20) und (21)
- 20: Vorderes Teilsegment des Permeatsammelrohrs (13) einer Kartusche (Permeatadapter)
- 21: Hinteres Teilsegment des Permeatsammelrohrs (13) einer Kartusche
- 22: Feedkanal-Platzhalterlage
- 23: Permeatkanal-Platzhalterlage
- 24: Fluideinlass des Separationsmoduls in das Modulgehäuse (4)
- 25: Permeatauslass des Separationsmoduls am Verschlussdeckel (32) des Modulgehäuses (4) (beides in Abbildung 3 nicht dargestellt)
- 26: Retentatauslass des Modulgehäuses
- 27: Fluidbarriere am hinteren Ende des PSR (13)
- 28: Spalt zwischen Endkappe EK1 (5a) und der inneren Oberfläche des Modulgehäuses (4)
- 29: Zwischenhohlraum zwischen Kartusche (1a) und (1b) im Modulgehäuse (4)
- 30: Verbindung des PSR (13) von Kartusche (1a) und Kartusche (1b)
- 31: Endhohlraum im Modulgehäuse (4)
- 32: Verschlussdeckel des Modulgehäuses (4) (in Abbildung 3 nicht dargestellt)

## Patentansprüche

1. Kartusche (1) zur Auftrennung eines Fluidgemisches, bevorzugt eines Gasgemisches, umfassend
ein Membranelement (2), welches aufweist:
- Hohlfaser- oder Flachmembranen (11), mit einem vorderen Ende ME1 und einem hinteren Ende ME2 auf der gegenüberliegenden Seite,
- einen vorderen Verschluss V1 (5a) an ME1
- einen hinteren Verschluss V2 (5b) an ME2
- eine für das zu trennende Fluidgemisch impermeable Barriere (6), die um die Membranen (11) im Bereich zwischen V1 (5a) und V2 (5b), angeordnet ist,
und
- ein Dichtelement (3),
**dadurch gekennzeichnet, dass**
- das Dichtelement (3) ein eigenständiges, unabhängiges Element der Kartusche (1) darstellt, das die Kartusche (1) nach dem Einbau in ein Modulgehäuse (4) fluiddicht mit der inneren Oberfläche des Modulgehäuses (4) verbindet und aus mindestens zwei Teilen besteht, wovon
▪ ein Teil eine Dichtung (8), bevorzugt ein Dichtring oder ein Abstreifer, ist, die nach Einbau der Kartusche (1) in ein Modulgehäuse (4) eines Fluidseparationsmoduls (7), dicht an die Innenwand des Modulgehäuses (4) anschließt, und
▪ ein weiteres Teil ein Trägerelement (9) ist, dass die Dichtung (8) trägt und das reversibel an dem vorderen oder hinteren Verschluss V1 (5a) oder V2 (5b) des Membranelements (2) angebracht ist.

2. Kartusche nach Anspruch 1,
**dadurch gekennzeichnet, dass**
das Membranelement (2) aufweist:
- ein, aus einem oder mehreren Segmenten bestehendes, Permeatsammelrohr PSR (13) mit einem vorderen Ende PSRE1 (13a) und einem hinteren Ende PSRE2 (13b),
- mindestens ein Bündel aus Hohlfasermembranen (11) mit einem vorderen Ende ME1 und einem hinteren Ende ME2, das/die um ein PSR (13) angeordnet ist/sind, wobei das PSR (13) bzw. alle Segmente des PSR (13) zwischen ME1 und ME2 eine oder mehrere Öffnungen oder Poren aufweist,
- einen ersten Vergussabschnitt VA1 (14a) an ME1 und PSRE1 (13a) sowie einen zweiten Vergussabschnitt VA2 (14b) an ME2 und PSRE2 (13b), wobei die Kerne der Hohlfasermembranen zumindest an ME1, bevorzugt an ME1 und ME2 , geöffnet sind,
- einen vorderen Verschluss V1 (5a) mit mindestens einer Fluideintrittsöffnungen bzw. -austrittsöffnung in das bzw. aus dem Membranelement (2)
- einen hinteren Verschluss V2 (5b) mit mindestens einer Fluideintrittsöffnungen bzw. -austrittsöffnung in das bzw. aus dem Membranelement (2).

3. Kartusche nach Anspruch 1,
**dadurch gekennzeichnet, dass**
das Membranelement (2) aufweist:
- ein, aus einem oder mehreren Segmenten bestehendes, Permeatsammelrohr PSR (13) mit einem vorderen Ende PSRE1 (13a) und einem hinteren Ende PSRE2 (13b),
- mindestens ein Bündel aus Hohlfasermembranen (11) mit einem vorderen Ende ME1 und einem hinteren Ende ME2 , das/die um ein PSR (13)angeordnet ist/sind, wobei das PSR (13) bzw. alle Segmente des PSR (13) im Bereich zwischen ME1 und ME2 für das zu trennende Fluidgemisch undurchlässig ausgestaltet ist/sind,
- einen ersten Vergussabschnitt VA1 (14a) an ME1 und PSRE1 (13a) sowie einen zweiten Vergussabschnitt VA2 (14b) an ME2 und PSRE2 (13b), wobei die Holfasern an ME1 in VA1 (14a) derart eingeschlossen sind, dass die Kerne der Hohlfasermembranen geöffnet sind und die Holfasern an ME2 in VA2 (14b) derart eingeschlossen sind, dass sie verschlossen sind,
- eine für das zu trennende Fluidgemisch impermeable Barriere (6) die die Anordnung aus PSR (13) und Hohlfasermembranen (11) im Bereich zwischen VA1 (14a) und VA2 (14b) umschließt, wobei die impermeable Barriere (6), bezogen auf die Längsachse der Kartusche (1), im ersten Drittel, bevorzugt im ersten Viertel der Strecke zwischen VA1 (14a) und VA2 (14b), besonders bevorzugt im Abstand von 0 bis 10 cm hinter der inneren Stirnseite von VA1 (14ai) und ganz besonders bevorzugt im Abstand von 2 bis 4 cm hinter der inneren Stirnseite von VA1 (14ai) so ausgestaltet ist, dass eine oder mehrere Fluideintrittsöffnung/en oder -spalte (12), in den Zwischenraum zwischen der impermeablen Barriere (6) und dem PSR (13), vorhanden sind,
- eine vordere Endkappe EK1, als vorderer Verschluss V1 (5a), die über VA1 (14a) angeordnet ist und optional eine hintere Endkappe EK2, die sofern vorhanden, über VA2 (14b) angeordnet ist, wobei EK2 oder VA2 (14b) den hinteren Verschluss V2 (5b) ausbildet,
wobei
- EK1 (5a) derart ausgestaltet und über VA1 (14a) angeordnet ist, dass zwischen der äußeren Stirnseite von VA1 (14aa), an der das Permeat aus den Hohlfaserkernen ausströmt, und der inneren Oberfläche der Endkappe EK1 (5a) ein EK1-Hohlraum (15) gebildet wird,
- im Bereich des EK1-Hohlraums (15) Permeataustrittsöffnungen (16) im PSR (13) bzw. in einem Segment des PSRs (13) vorhanden sind, so dass eine Fluidkommunikation zwischen dem Fluid im EK1-Hohlraum (15) und dem Inneren des PSR (13) gegeben ist,
- mindestens eine Austrittsöffnung (17) für das Retentat im letzten Viertel der Strecke zwischen VA1 (14a) und VA2 (14b) oder eingebettet in VA2 (14b), vorhanden ist, wobei
- EK2 (5b), sofern vorhanden, ebenfalls mindestens eine Austrittsöffnung (18) für das Retentat aufweist.

4. Kartusche nach Anspruch 1,
**dadurch gekennzeichnet, dass**
das Membranelement (2) aufweist:
- ein, aus einem oder mehreren Segmenten bestehendes, Permeatsammelrohr PSR (13) mit einem vorderen Ende PSRE1 (13a) und einem hinteren Ende PSRE2 (13b),
- einen vorderen Verschluss V1 (5a) mit mindestens einer Fluideintrittsöffnung oder -austrittsöffnung in das Membranelement (2)
- einen hinteren Verschluss V2 (5b) mit mindestens Fluideintrittsöffnung oder -austrittsöffnung aus dem Membranelement (2)
- eine Membranwicklung umfassend
∘ eine oder mehrere Flachmembranen (11),
∘ eine oder mehrere poröse Feedkanal-Platzhalterlagen (22), mit einer vorderer Kante ME1, auf der Seite von V1 (5a) und einer hinteren Kante ME2 , auf der Seite von V2 (5b),
∘ eine oder mehrere Permeatkanal-Platzhalterlagen (23),
wobei
zwischen einer Feedkanal-Platzhalterlage (22) und einer Permeatkanal-Platzhalterlage (23) immer mindestens eine Membranlage (11) vorhanden ist und das PSR (13) eine oder mehrere Öffnungen oder Poren aufweist.

5. Kartusche nach einem der Ansprüche 1 bis 4,
**dadurch gekennzeichnet, dass**
die impermeable Barriere (6) aus einer Folie oder einem Schlauch oder einem Rohr oder einem Tape oder einem mit Epoxid Harz "vermischtem" Glassgewebe besteht, das/die bevorzugt durch Aufschrumpfen und/oder durch Eingießen in VA1 (14a) und/oder VA2 (14b) und/oder durch äußere Fixierhilfsmittel und/oder durch verschweißen und/oder durch kleben am Membranelement (2) fixiert ist.

6. Kartusche nach einem der Ansprüche 1 bis 5,
**dadurch gekennzeichnet, dass** das Membranelement (2) ein Permeatsammelrohr PSR (13) aufweist, wobei
das PSR (13) aus mehreren Segmenten besteht, welche innerhalb eines Membranelements (2), durch eine Verschraubung oder eine Flansch- oder eine Steckverbindung oder durch einen Bajonettverschluss oder durch Kleben miteinander verbunden sind.

7. Kartusche nach Anspruch 3,
**dadurch gekennzeichnet, dass**
das PSR (13) einer Kartusche aus mindestens zwei Segmenten besteht, wobei das erste Segment (20) an PSRE1 (13a) beginnt und bis mindestens in VA1 (14a) hineinreicht und dort mit einem zweiten Segment (21) verbunden ist, dass alleine oder in Verbindung mit weiteren Segmenten den Rest des PSR (13) bis hin zu PSRE2 (13b) ausbildet, wobei bevorzugt das erste Segment (20) die Permeataustrittsöffnungen (16) in das PSR (13) umfasst.

8. Kartusche nach einem der Ansprüche 1 bis 3,
**dadurch gekennzeichnet, dass** das Membranelement (2) ein Permeatsammelrohr PSR (13) aufweist, wobei Hohlfasermembranen (11) als ein oder mehrere Bündel um das PSR (13) angeordnet sind, entweder parallel zur Längsachse des PSR (13) oder um das PSR (13) gewickelt, vorzugsweise schraubenlinienförmig, besonders bevorzugt derart, dass sich die Schraubenlinien pro Wickellage überkreuzen, d.h. dass eine Lage schraubenlinienförmig aus Richtung VA1 (14a) nach VA2 (14b) gewickelt wurde, die nachfolgende dann aus Richtung von VA2 (14b) nach VA1 (14a) und dann immer abwechseln so weiter und/oder
das Bündel aus Hohlfasermembranen einen weitgehend kreisförmigen Querschnitt mit einem Durchmesser von 150-200 mm, bevorzugt von 170-195 mm, besonders bevorzugt von 180-190 mm aufweist.

9. Kartusche nach einem der vorherigen Ansprüche,
**dadurch gekennzeichnet, dass**
die Hohlfasermembranen aus Polyimiden, bevorzugt aus Polyimiden, die erhältlich sind durch Reaktion von
mindestens einem Dianhydrid, ausgewählt aus der Gruppe bestehend aus 3,4,3'4'-Benzophenon-tetracarbonsäure-dianhydrid, 1,2,4,5-Benzol-tetracarbonsäure-dianhydrid, 3,4,3'4'-Biphenyl- Tetracarbonsäuredianhydrid, Oxydiphthalsäure-dianhydrid, Sulfonyldiphthasäure-dianhydride, 1,1,1,3,3,3-Hexafluor-2,2-propyliden-diphthalsäure-dianhydride
und
mindestens einem Diisocyanat, ausgewählt aus der gruppe bestehend aus Toluol-2,4-diisocyanat, Toluol-2,6-diisocyanat, 4,4'-Methylendiphenyldiisocyanat, 2,4,6-Trimethyl-1,3-phenylenediiso-cyanat, 2,3,4,5-Tetramethyl-1,4-phenylenediisocyanat,
bestehen.

10. Kartusche nach einem der Ansprüche 1 bis 9,
**dadurch gekennzeichnet,**
**dass** das Trägerelement (9) als Platte ausgeführt ist, die, je nachdem ob sie an V1 (5a) oder V2 (5b) des Membranelements (2) angebracht wird, Fluideinlässe oder -auslässe aufweisen,
oder
**dass** das Trägerelement (9) als Ring ausgeführt wird, wobei vorzugsweise der Durchmesser der Öffnung in der Mitte des Rings zwischen 35 und 80%, besonders bevorzugt zwischen 40 und 80% und ganz besonders bevorzugt zwischen 50 und 75% des äußeren Durchmessers des Verschluss V1 (5a) bzw. V2 (5b) beträgt, mit dem das Trägerelement (9) verbunden wird,
oder
**dass** das Trägerelement (9) als Sieb ausgeführt wird.

11. Kartusche nach einem der Ansprüche 1 bis 10,
**dadurch gekennzeichnet,**
**dass** das Trägerelement (9) aus Metal oder Kunststoff oder besteht und/oder
**dass** der vordere oder hintere Verschluss V1 (5a) bzw. V2 (5b) aus Metall oder Kunststoff besteht
und/oder
**dass** das Trägerelement (9) auf V1 (5a) oder V2 (5b) aufgeschraubt wird oder mit diesem mittels Schrauben oder Klemmelementen, bevorzugt Wiederhaken oder Einrasthaken, oder mit einem Kleber oder Kombinationen davon verbunden wird.

12. Fluidseparationsmodul (7), bevorzugt Gasseparationsmodul, umfassend eine oder mehrere Kartuschen (1) nach einem der Ansprüche 1 bis 11.

13. Fluidseparationsmodul (7) nach Anspruch 12
umfassend
- ein druckfestes Gehäuse (4) mit einem Fluideinlass (24) sowie einem Permeat- und einem Retentatauslass (25 bzw. (26),
- im druckfesten Gehäuse (4) angeordnet, eine Kartusche (1) oder mehrere zu einer Kartuschenkette zusammengeschlossene Kartusche(n) (1), nach einem der Ansprüche 1 bis 11, wobei das Membranelement (2) ein Permeatsammelrohr PSR (13) aufweist, mit einem vorderen Ende PSRE1 (13a) und einem hinteren Ende PSRE2 (13b),
- eine Verbindung des Permeatauslasses (25) des Modulgehäuses (4) mit dem vorderen Ende PSRE1 (13a) des Permeatsammelrohrs(13), der dem Permeatauslass des Gehäuses nächstgelegenen Kartusche (1),
wobei
- der Retentatauslass (26) am Modulgehäuse (4) stromabwärts der Retentatauslassöffnungen (17) und/oder (18) der hintersten Kartusche (1) im Gehäuse (4) angeordnet ist,
- eine Fluidbarriere (27), d.h. einen fluiddichten Verschluss des PSR (13), die im Bereich des PSRE2 (13b) der Kartusche (1) bzw. wenn mehrere Kartuschen (1) zu einer Kartuschenkette zusammengeschaltet werden, des PSRE2 (13b) der hintersten Kartusche (1) der Kartuschenkette, angeordnet ist.

## Claims

1. Cartridge (1) for separation of a fluid mixture, preferably a gas mixture,
comprising
a membrane element (2) having:
- hollow-fibre or flat-sheet membranes (11) having a front end ME1 and a rear end ME2 on the opposite side,
- a front closure V1 (5a) at ME1
- a rear closure V2 (5b) at ME2
- a barrier (6) which is impermeable to the fluid mixture to be separated and is arranged around the membranes (11) in the region between V1 (5a) and V2 (5b),
and
- a sealing element (3),
**characterized in that**
- the sealing element (3) is a separate, independent element of the cartridge (1) which connects the cartridge (1), after installation into a module housing (4), in a fluid-tight manner to the inner surface of the module housing and consists of at least two parts, of which
• one part is a seal (8), preferably a sealing ring or a wiper, which, after installation of the cartridge (1) into a module housing (4) of a fluid separation module (7), tightly adjoins the inner wall of the module housing (4), and
• a further part is a carrier element (9) which bears the seal (8) and which is reversibly attached to the front or back closure V1 (5a) or V2 (5b) of the membrane element (2).

2. Cartridge according to Claim 1,
**characterized in that**
the membrane element (2) has:
- a permeate collecting tube PSR (13) which consists of one or more segments and has a front end PSRE1 (13a) and a rear end PSRE2 (13b),
- at least one bundle of hollow-fibre membranes (11) which has a front end ME1 and a rear end ME2 and is arranged around a PSR (13), the PSR (13) or all segments of the PSR (13) having one or more orifices or pores between ME1 and ME2,
- a first cast section VA1 (14a) at ME1 and PSRE1 (13a) and a second cast section VA2 (14b) at ME2 and PSRE2 (13b), the cores of the hollow-fibre membranes being open at least at ME1, preferably at ME1 and ME2,
- a front closure V1 (5a) having at least one fluid entry orifice into or exit orifice out of the membrane element (2)
- a rear closure V2 (5b) having at least one fluid entry orifice into or exit orifice out of the membrane element (2).

3. Cartridge according to Claim 1,
**characterized in that**
the membrane element (2) has:
- a permeate collecting tube PSR (13) which consists of one or more segments and has a front end PSRE1 (13a) and a rear end PSRE2 (13b),
- at least one bundle of hollow-fibre membranes (11) which has a front end ME1 and a rear end ME2 and is arranged around a PSR (13), the PSR (13) or all segments of the PSR (13) being configured in the region between ME1 and ME2 so as to be impermeable to the fluid mixture to be separated,
- a first cast section VA1 (14a) at ME1 and PSRE1 (13a) and a second cast section VA2 (14b) at ME2 and PSRE2 (13b), the hollow fibres at ME1 in VA1 (14a) being enclosed in such a way that the cores of the hollow-fibre membranes are open and the hollow fibres at ME2 in VA2 (14b) being enclosed in such a way that they are closed,
- a barrier (6) which is impermeable to the fluid mixture to be separated and surrounds the arrangement composed of PSR (13) and hollow-fibre membranes (11) in the region between VA1 (14a) and VA2 (14b), the impermeable barrier (6) being configured, based on the longitudinal axis of the cartridge (1), in the first third, preferably in the first quarter, of the distance between VA1 (14a) and VA2 (14b), more preferably at a distance of 0 to 10 cm behind the inner end face of VA1 (14ai) and most preferably at a distance of 2 to 4 cm behind the inner end face of VA1 (14ai), in such a way that one or more fluid entry orifice (s) or gap(s) (12) to the interspace between the impermeable barrier (6) and the PSR (13) are present,
- a front end cap EK1, as front closure V1 (5a), placed onto VA1 (14a) and optionally a rear end cap EK2, if present, placed onto VA2 (14b), with EK2 or VA2 (14b) forming the rear closure V2 (5b),
where
- EK1 (5a) is configured and placed onto VA1 (14a) in such a way that an EK1 cavity (15) is formed between the outer end face of VA1 (14aa), where the permeate flows out of the hollow-fibre cores, and the inner surface of the end cap EK1 (5a),
- permeate exit orifices (16) are present in the PSR (13) or in a segment of the PSR (13) in the region of the EK1 cavity (15), such that there is fluid communication between the fluid in the EK1 cavity (15) and the interior of the PSR (13),
- at least one exit orifice (17) for the retentate is present in the last quarter of the distance between VA1 (14a) and VA2 (14b) or embedded into VA2 (14b), where
- EK2 (5b), if present, likewise has at least one exit orifice (18) for the retentate.

4. Cartridge according to Claim 1,
**characterized in that**
the membrane element (2) has:
- a permeate collecting tube PSR (13) which consists of one or more segments and has a front end PSRE1 (13a) and a rear end PSRE2 (13b),
- a front closure V1 (5a) having at least one fluid entry orifice or exit orifice into the membrane element (2)
- a rear closure V2 (5b) having at least one fluid entry orifice or exit orifice out of the membrane element (2)
- a membrane winding comprising
∘ one or more flat-sheet membranes (11),
∘ one or more porous feed channel spacer sheets (22) having a front edge ME1 on the V1 (5a) side and a rear edge ME2 on the V2 (5b) side,
∘ one or more permeate channel spacer sheets (23),
where
there is always at least one membrane sheet (11) present between a feed channel spacer sheet (22) and a permeate channel spacer sheet (23) and the PSR (13) has one or more orifices or pores.

5. Cartridge according to any of Claims 1 to 4,
**characterized in that**
the impermeable barrier (6) consists of a film or a hose or a tube or a tape or a glass fabric "blended" in with epoxy resin, preferably fixed to the membrane element (2) by shrinkage and/or by casting into VA1 (14a) and/or VA2 (14b) and/or by means of external fixing aids and/or by welding and/or by adhesive bonding.

6. Cartridge according to any of Claims 1 to 5,
**characterized in that** the membrane element (2) has a permeate collecting tube PSR (13), where the PSR (13) consists of several segments connected to one another within a membrane element (2) by a screw connection or a flange connection or a plug-in connection or by means of a bayonet closure or by adhesive bonding.

7. Cartridge according to Claim 3,
**characterized in that**
the PSR (13) of a cartridge consists of at least two segments, the first segment (20) beginning at PSRE1 (13a) and extending at least into VA1 (14a) and being connected there to a second segment (21) which, alone or in conjunction with further segments, forms the rest of the PSR (13) as far as PSRE2 (13b), the first segment (20) preferably comprising the permeate exit orifices (16) into the PSR (13).

8. Cartridge according to any of Claims 1 to 3,
**characterized in that** the membrane element (2) has a permeate collecting tube PSR (13), where hollow-fibre membranes (11) are arranged around the PSR (13) as one or more bundles, either parallel to the longitudinal axis of the PSR (13) or wound around the PSR (13), preferably helically, more preferably in such a way that the helical lines of each winding layer cross over, meaning that one layer has been wound helically from the direction of VA1 (14a) to VA2 (14b), and then the next from the direction of VA2 (14b) to VA1 (14a), and then alternate continuously in this way,
and/or
the bundle of hollow-fibre membranes has a substantially circular cross section having a diameter of 150-200 mm, preferably of 170-195 mm, more preferably of 180-190 mm.

9. Cartridge according to any of the preceding claims,
**characterized in that**
the hollow-fibre membranes consist of polyimides, preferably of polyimides obtainable by reaction of at least one dianhydride selected from the group consisting of 3,4,3',4'-benzophenonetetracarboxylic dianhydride, 1,2,4,5-benzenetetracarboxylic dianhydride, 3,4,3',4'-biphenyltetracarboxylic dianhydride, oxydiphthalic dianhydride, sulfonyldiphthalic dianhydrides, 1,1,1,3,3,3-hexafluoro-2,2-propylidenediphthalic dianhydrides
and
at least one diisocyanate selected from the group consisting of toluene 2,4-diisocyanate, toluene 2,6-diisocyanate, 4,4'-methylenediphenyl diisocyanate, 2,4,6-trimethyl-1,3-phenylene diisocyanate, 2,3,4,5-tetramethyl-1,4-phenylene diisocyanate.

10. Cartridge according to any of Claims 1 to 9,
**characterized in that**
the carrier element (9) takes the form of a plate which, according to whether it is attached to V1 (5a) or V2 (5b) of the membrane element (2), has fluid inlets or outlets,
or
the carrier element (9) takes the form of a ring, where the diameter of the opening in the middle of the ring is preferably between 35% and 80%, more preferably between 40% and 80% and most preferably between 50% and 75% of the external diameter of the closure V1 (5a) or V2 (5b) to which the carrier element (9) is connected,
or
the carrier element (9) takes the form of a sieve.

11. Cartridge according to any of Claims 1 to 10, cha
racterized in that
the carrier element (9) consists of metal or plastic
and/or
the front or rear closure V1 (5a) or V2 (5b) consists of metal or plastic
and/or
the carrier element (9) is screw-connected to V1 (5a) or V2 (5b) or is connected thereto by means of screws or grip elements, preferably barbs or latching hooks, or with an adhesive or combinations thereof.

12. Fluid separation module (7), preferably gas separation module, comprising one or more cartridges (1) according to any of Claims 1 to 11.

13. Fluid separation module (7) according to Claim 12, comprising
- a pressure-resistant housing (4) having a fluid inlet (24) and a permeate outlet and retentate outlet (25) and (26) respectively,
- one cartridge (1) or a plurality of cartridges (1) connected to form a chain of cartridges, according to any of Claims 1 to 11, arranged in the pressure-resistant housing (4), wherein the membrane element (2) has a permeate collecting tube PSR (13) having a front end PSRE1 (13a) and a rear end PSRE2 (13b),
- a connection of the permeate outlet (25) of the module housing (4) to the front end PSRE1 (13a) of the permeate collecting tube (13) of the cartridge (1) closest to the permeate outlet of the housing,
where
- the retentate outlet (26) in the module housing (4) is arranged downstream of the retentate outlet orifices (17) and/or (18) of the rearmost cartridge (1) in the housing (4),
- a fluid barrier (27), i.e. a fluid-tight closure of the PSR (13), is arranged in the region of the PSRE2 (13b) of the cartridge (1) or, when a plurality of cartridges (1) are connected to form a chain of cartridges, of the PSRE2 (13b) of the rearmost cartridge (1) of the chain of cartridges.

## Revendications

1. Cartouche (1) pour la séparation d'un mélange fluidique, de préférence d'un mélange gazeux, comprenant un élément membranaire (2), qui présente :
- des membranes à fibres creuses ou des membranes planes (11), présentant une extrémité avant ME1 et une extrémité arrière ME2 sur le côté opposé,
- une fermeture avant V1 (5a) au niveau de ME1
- une fermeture arrière V2 (5b) au niveau de ME2
- une barrière (6) imperméable pour le mélange fluidique à séparer, qui est disposée autour des membranes (11) dans la zone entre V1 (5a) et V2 (5b) et
- un élément d'étanchéité (3),
**caractérisée en ce que**
- l'élément d'étanchéité (3) représente un élément indépendant, autonome de la cartouche (1) qui relie la cartouche (1) après le montage dans un boîtier de module (4) de manière étanche aux fluides à la surface interne du boîtier de module (4) et qui est constitué par au moins deux parties, dont
- une partie est un joint d'étanchéité (8), de préférence une bague d'étanchéité ou un racloir, qui, après le montage de la cartouche (1) dans un boîtier de module (4) d'un module de séparation de fluides (7), se raccorde de manière étanche au niveau de la paroi interne du boîtier de module (4) et
- une autre partie est un élément support (9), qui supporte le joint d'étanchéité (8) et qui est attaché de manière réversible à la fermeture avant V1 (5a) ou arrière V2 (5b) de l'élément membranaire (2).

2. Cartouche selon la revendication 1, **caractérisée en ce que** l'élément membranaire (2) présente :
- un tube de collecte de perméat PSR (13) constitué par un ou plusieurs segments, présentant une extrémité avant PSRE1 (13a) et une extrémité arrière PSRE2 (13b),
- au moins un faisceau de membranes à fibres creuses (11), présentant une extrémité avant ME1 et une extrémité arrière ME2, qui est disposé autour d'un PSR (13), le PSR (13) ou tous les segments du PSR (13) entre ME1 et ME2 présentant une ou plusieurs ouvertures ou un ou plusieurs pores,
- une première section de scellement VA1 (14a) au niveau de ME1 et de PSRE1 (13a) ainsi qu'une deuxième section de scellement VA2 (14b) au niveau de ME2 et de PSRE2 (13b), les âmes des membranes à fibres creuses étant ouvertes, au moins au niveau de ME1, de préférence au niveau de ME1 et de ME2,
- une fermeture avant V1 (5a) présentant au moins une ouverture d'entrée de fluide ou, selon le cas, de sortie de fluide dans ou, selon le cas, hors de l'élément membranaire (2)
- une fermeture arrière V2 (5b) présentant au moins une ouverture d'entrée de fluide ou, selon le cas, de sortie de fluide dans ou, selon le cas, hors de l'élément membranaire (2).

3. Cartouche selon la revendication 1, **caractérisée en ce que** l'élément membranaire (2) présente :
- un tube de collecte de perméat PSR (13) constitué par un ou plusieurs segments, présentant une extrémité avant PSRE1 (13a) et une extrémité arrière PSRE2 (13b),
- au moins un faisceau de membranes à fibres creuses (11), présentant une extrémité avant ME1 et une extrémité arrière ME2, qui est disposé autour d'un PSR (13), le PSR (13) ou tous les segments du PSR (13) dans la zone entre ME1 et ME2 étant conçu (s) de manière imperméable pour le mélange fluidique à séparer,
- une première section de scellement VA1 (14a) au niveau de ME1 et de PSRE1 (13a) ainsi qu'une deuxième section de scellement VA2 (14b) au niveau de ME2 et de PSRE2 (13b), les fibres creuses au niveau de ME1 étant enrobées dans VA1 (14a) de manière telle que les âmes des membranes à fibres creuses sont ouvertes et les fibres creuses au niveau de ME2 étant enrobées dans VA2 (14b) de manière telle qu'elles sont fermées,
- une barrière (6) imperméable pour le mélange fluidique à séparer, qui entoure la disposition constituée par le PSR (13) et les membranes à fibres creuses (11) dans la zone entre VA1 (14a) et VA2 (14b), la barrière imperméable (6) étant conçue, par rapport à l'axe longitudinal de la cartouche (1), dans le premier tiers, de préférence dans le premier quart de la zone entre VA1 (14a) et VA2 (14b), de manière particulièrement préférée à une distance entre 0 et 10 cm derrière la face avant interne de VA1 (14ai) et de manière tout particulièrement préférée à une distance de 2 à 4 cm derrière la face avant interne de VA1 (14ai), de manière telle qu'une ou plusieurs ouverture (s) et/ou fente (s) (12) d'entrée de fluide est/sont située(s) dans l'espace intermédiaire entre la barrière imperméable (6) et le PSR (13),
- un capuchon d'extrémité avant EK1, en tant que fermeture avant V1 (5a), qui est disposé sur VA1 (14a) et éventuellement un capuchon d'extrémité arrière EK2, qui, s'il est présent, est disposé sur VA2 (14b), EK2 ou VA2 (14b) formant la fermeture arrière V2 (5b),
- EK1 (5a) étant conçu et disposé sur VA1 (14a) de manière telle qu'un cavité d'EK1 (15) est formé entre la face avant externe de VA1 (14aa), au niveau de laquelle le perméat s'écoule hors des âmes de fibres creuses, et la surface interne du capuchon d'extrémité EK1 (5a),
- dans la zone de la cavité d'EK1 (15), des ouvertures de sortie de perméat (16) étant présentes dans le PSR (13) ou dans un segment du PSR (13) de telle sorte qu'il existe une communication fluidique entre le fluide dans la cavité d'EK1 (15) et l'intérieur du PSR (13),
- au moins une ouverture de sortie (17) pour le rétentat étant présente dans le dernier quart de la zone entre VA1 (14a) et VA2 (14b) ou incorporée dans VA2 (14b),
- EK2 (5b), s'il est présent, présentant également au moins une ouverture de sortie (18) pour le rétentat.

4. Cartouche selon la revendication 1, **caractérisée en ce que** l'élément membranaire (2) présente :
- un tube de collecte de perméat PSR (13) constitué par un ou plusieurs segments, présentant une extrémité avant PSRE1 (13a) et une extrémité arrière PSRE2 (13b),
- une fermeture avant V1 (5a) présentant au moins une ouverture d'entrée ou de sortie de fluide dans l'élément membranaire (2)
- une fermeture arrière V2 (5b) présentant au moins une ouverture d'entrée ou de sortie de fluide hors de l'élément membranaire (2)
- un enroulement membranaire comprenant
- une ou plusieurs membranes planes (11),
- une ou plusieurs couches poreuses d'écartement (22) de canal d'alimentation, présentant un bord avant ME1, sur le côté de V1 (5a) et un bord arrière ME2, sur le côté de V2 (5b),
- une ou plusieurs couches d'écartement (23) de canal de perméat,
au moins une couche membranaire (11) étant toujours présente entre une couche d'écartement (22) de canal d'alimentation et une couche d'écartement (23) de canal de perméat et le PSR (13) présentant une ou plusieurs ouvertures ou un ou plusieurs pores.

5. Cartouche selon l'une quelconque des revendications 1 à 4, **caractérisée en ce que** la barrière imperméable (6) est constituée par une feuille ou un flexible ou un tube ou un ruban ou un tissu de verre "mélangé" avec une résine époxyde, qui est de préférence fixé(e) par rétraction et/ou par coulée dans VA1 (14a) et/ou dans VA2 (14b) et/ou par des moyens auxiliaires externes de fixation et/ou par soudure et/ou par collage à l'élément membranaire (2).

6. Cartouche selon l'une quelconque des revendications 1 à 5, **caractérisée en ce que** l'élément membranaire (2) présente un tube de collecte de perméat PSR (13), le PSR (13) étant constitué par plusieurs segments qui sont reliés les uns aux autres au sein d'un élément membranaire (2) par vissage ou par une liaison par bride ou par enfichage ou par une fermeture à baïonnette ou par collage.

7. Cartouche selon la revendication 3, **caractérisée en ce que** le PSR (13) d'une cartouche est constitué par au moins deux segments, le premier segment (20) commençant au niveau de la PSRE1 (13a) et s'étendant jusqu'à au moins dans VA1 (14a) et y étant relié à un deuxième segment (21), qui forme seul ou en association avec d'autres segments le reste du PSR (13) jusqu'à la PSRE2 (13b), le premier segment (20) comprenant de préférence les ouvertures de sortie de perméat (16) dans le PSR (13).

8. Cartouche selon l'une quelconque des revendications 1 à 3, **caractérisée en ce que** l'élément membranaire (2) présente un tube de collecte de perméat PSR (13), les membranes à fibres creuses (11) étant disposées comme un ou plusieurs faisceaux autour du PSR (13) soit parallèlement à l'axe longitudinal du PSR (13) soit enroulé(s) autour du PSR (13), de préférence en spirale, de manière particulièrement préférée de manière telle que les spirales se croisent par enroulement, c'est-à-dire qu'une couche a été enroulée en spirale dans le sens VA1 (14a) vers VA2 (14b), la couche suivante dans le sens VA2 (14b) vers VA1 (14a) puis ainsi de suite en alternance et/ou le faisceau de membranes à fibres creuses présentant une section sensiblement circulaire présentant un diamètre de 150-200 mm, de préférence de 170-195 mm, de manière particulièrement préférée de 180-190 mm.

9. Cartouche selon l'une quelconque des revendications précédentes, **caractérisée en ce que** les membranes à fibres creuses sont constituées par des polyimides, de préférence par des polyimides qui peuvent être obtenus par réaction d'au moins un dianhydride, choisi dans le groupe constitué par le dianhydride de l'acide 3,4,3'4'-benzophénonetétracarboxylique, le dianhydride de l'acide 1,2,4,5-benzènetétracarboxylique, le dianhydride de l'acide 3,4,3'4'-biphényltétracarboxylique, le dianhydride de l'acide oxydiphtalique, le dianhydride de l'acide sulfonyldiphtalique, le dianhydride de l'acide 1,1,1,3,3,3-hexafluoro-2,2-propylidènediphtalique et d'au moins un diisocyanate, choisi dans le groupe constitué par le 2,4-diisocyanate de toluène, le 2,6-diisocyanate de toluène, le diisocyanate de 4,4'-méthylènediphényle, le diisocyanate de 2,4,6-triméthyl-1,3-phénylène, le diisocyanate de 2,3,4,5-tétraméthyl-1,4-phénylène.

10. Cartouche selon l'une quelconque des revendications 1 à 9, **caractérisée**
- **en ce que** l'élément support (9) est conçu comme une plaque qui, en fonction du fait qu'elle est attaché à V1 (5a) ou à V2 (5b) de l'élément membranaire (2), présente des entrées ou des sorties de fluide ou
- **en ce que** l'élément support (9) est conçu comme un anneau, le diamètre de l'ouverture au centre de l'anneau représentant de préférence entre 35 et 80%, de manière particulièrement préférée entre 40 et 80% et de manière tout particulièrement préférée entre 50 et 75% du diamètre externe de la fermeture V1 (5a) ou, selon le cas, V2 (5b), à laquelle l'élément support (9) est relié ou
- **en ce que** l'élément support (9) est conçu sous forme de tamis.

11. Cartouche selon l'une quelconque des revendications 1 à 10, **caractérisée**
- **en ce que** l'élément support (9) est en métal ou en matériau synthétique et/ou
- **en ce que** la fermeture avant V1 (5a) ou, selon le cas, la fermeture arrière V2 (5b) est en métal ou en matériau synthétique et/ou
- **en ce que** l'élément support (9) est vissé sur V1 (5a) ou sur V2 (5b) ou relié à celle-ci au moyen de vis ou d'élément de serrage, de préférence de crochets à barbillons ou de crochets de verrouillage ou par une colle ou des combinaisons de ceux-ci.

12. Module de séparation de fluides (7), de préférence module de séparation de gaz, comprenant une ou plusieurs cartouches (1) selon l'une quelconque des revendications 1 à 11.

13. Module de séparation de fluides (7) selon la revendication 12, comprenant
- un boîtier (4) résistant à la pression présentant une entrée de fluide (24) ainsi qu'une sortie de perméat et une sortie de rétentat (respectivement 25 ou 26),
- disposée (s) dans le boîtier (4) résistant à la pression, une cartouche (1) ou plusieurs cartouches (1) rassemblées en une chaîne de cartouches, selon l'une quelconque des revendications 1 à 11, l'élément membranaire (2) présentant un tube de collecte de perméat PSR (13) présentant une extrémité avant PSRE1 (13a) et une extrémité arrière PSRE2 (13b),
- une liaison de la sortie de perméat (25) du boîtier de module (4) à l'extrémité avant PSRE1 (13a) du tube de collecte de perméat (13) de la cartouche (1) la plus proche de la sortie de perméat du boîtier,
- la sortie de rétentat (26) étant disposée dans le boîtier de module (4) en aval des ouvertures de sortie de rétentat (17) et/ou (18) de la cartouche (1) la plus en arrière dans le boîtier (4),
- une barrière fluidique (27), c'est-à-dire une fermeture étanche aux fluides du PSR (13), qui est disposée au niveau de la PSRE2 (13b) de la cartouche (1) ou de la PSRE2 (13b) de la cartouche (1) la plus en arrière de la chaîne de cartouches lorsque plusieurs cartouches (1) sont rassemblées en une chaîne de cartouches.
